# EUROPEAN PATENT APPLICATION

(11) **EP 4 379 415 A1**
(43) Date of publication of application: **05.06.2024**
(21) Application number: 22848886.2
(22) Date of filing: 03.03.2022
(51) Int. Cl.: G01S 7/481, G01S 7/4863, G01S 7/4914, G01C 3/06

(54) **SENSOR DEVICE AND ELECTRONIC EQUIPMENT**

(30) Priority: 28.07.2021 JP 2021123470
(71) Applicant: Sony Semiconductor Solutions Corporation, Atsugi-shi, Kanagawa 243-0014 (JP)
(72) Inventor: TODA Atsushi, Atsugi-shi, Kanagawa 243-0014 (JP); NAKAMURA Nobuo, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/009075
(87) International publication number: WO 2023/007802

(57) **Abstract**

The purpose of the present disclosure is to provide a compact, high-resolution, and high-sensitivity sensor device. The sensor device according to the present invention includes: an irradiation unit (211) that emits laser light to the object (OBJ); a light receiving unit (charge generation unit 221) that receives reflected light from the object; and a waveguide (212) that guides the laser light generated from a light source (laser light source 11) to the irradiation unit. The irradiation unit (211) and the light receiving unit (charge generation unit 221) are located on the optical axis of an external lens optical system (12).

## Description

### TECHNICAL FIELD

The technology according to the present disclosure (the present technology) relates to a sensor device that is used for a ToF image sensor, for example, and an electronic apparatus.

### BACKGROUND ART

In a LiDAR system, the optical system is separated into two optical systems: an irradiation system and a light receiving system. Therefore, two lens optical systems are necessary. Further, the irradiation system includes a scanner such as a galvanometer mirror, for example (see Patent Document 1, for example).

### CITATION LIST

### PATENT DOCUMENT

Patent Document 1: Japanese Patent Application Laid-Open No. 2019-144186

### SUMMARY OF THE INVENTION

### PROBLEMS TO BE SOLVED BY THE INVENTION

Meanwhile, the above LiDAR system is a very large system. The above LiDAR system is also costly, and furthermore, is low in resolution because no image is formed therein, and is low in sensitivity because of poor light condensing properties.

The present disclosure has been made in view of such circumstances, and aims to provide a compact, high-resolution, and high-sensitivity sensor device and an electronic apparatus.

### SOLUTIONS TO PROBLEMS

An embodiment of the present disclosure is a sensor device that includes: an irradiation unit that emits laser light to the object; a light receiving unit that receives reflected light from the object; and a waveguide that guides the laser light generated from a light source to the irradiation unit. The irradiation unit and the light receiving unit are located on the optical axis of an external lens optical system.

Another embodiment of the present disclosure is an electronic apparatus including a sensor device that includes: an irradiation unit that emits laser light to the object; a light receiving unit that receives reflected light from the object; and a waveguide that guides the laser light generated from a light source to the irradiation unit. The irradiation unit and the light receiving unit are located on the optical axis of an external lens optical system.

### BRIEF DESCRIPTION OF DRAWINGS

Fig. 1 is a schematic configuration diagram illustrating an example of the configuration of a distance measuring device to which a sensor device according to a first embodiment of the present disclosure is applied.
Fig. 2 is a diagram illustrating an example of the configuration of a solid-state imaging element according to the first embodiment.
Fig. 3 is a cross-sectional diagram illustrating an example of a schematic structure of a pixel array unit according to the first embodiment of the present disclosure.
Fig. 4 is a plan view illustrating an example of a schematic structure of an optical circuit board according to the first embodiment of the present disclosure.
Fig. 5 is a diagram for explaining the principle of retrograde light beams.
Fig. 6 is a diagram for explaining an operation according to the first embodiment.
Fig. 7 is a diagram illustrating information about an image to be obtained according to the first embodiment.
Fig. 8 is a diagram illustrating another example of the optical switch that is used according to the first embodiment.
Fig. 9 is a diagram for explaining a measurement method that is used according to the first embodiment.
Fig. 10 is a plan view illustrating an example of a schematic structure of an optical circuit board according to a first modification of the first embodiment.
Fig. 11 is a diagram for explaining an operation according to the first modification of the first embodiment.
Fig. 12 is a diagram illustrating information about an image to be obtained according to the first modification of the first embodiment.
Fig. 13 is a plan view illustrating an example of a schematic structure of an optical circuit board according to a second modification of the first embodiment.
Fig. 14 is a diagram illustrating information about an image to be obtained according to the second modification of the first embodiment.
Fig. 15 is a cross-sectional diagram illustrating an example of a schematic structure of a pixel array unit according to a second embodiment of the present disclosure.
Fig. 16 is a plan view illustrating an example of a schematic structure of a substrate according to the second embodiment of the present disclosure.
Fig. 17 is a diagram for explaining an operation according to the second embodiment.
Fig. 18 is a diagram illustrating information about an image to be obtained according to the second embodiment.
Fig. 19 is a plan view illustrating an example of a schematic structure of a substrate according to a first modification of the second embodiment.
Fig. 20 is a diagram for explaining an operation according to the first modification of the second embodiment.
Fig. 21 is a diagram illustrating information about an image to be obtained according to the first modification of the second embodiment.
Fig. 22 is a plan view illustrating an example of a schematic structure of a substrate according to a second modification of the second embodiment.
Fig. 23 is a diagram illustrating information about an image to be obtained according to the second modification of the second embodiment.
Fig. 24 is a plan view illustrating an example of a schematic structure of a semiconductor substrate forming a pixel array unit according to a third embodiment of the present disclosure.
Fig. 25 is a partial cross-sectional view illustrating an example of a schematic structure of a pixel according to the third embodiment of the present disclosure.
Fig. 26 is a plan view illustrating an example of a schematic structure of a semiconductor substrate forming a pixel array unit according to a fourth embodiment of the present disclosure.
Fig. 27 is a partial cross-sectional view illustrating an example of a schematic structure of a pixel according to the fourth embodiment of the present disclosure.
Fig. 28 is a plan view illustrating an example of a schematic structure of an optical circuit board forming a pixel array unit according to a fifth embodiment of the present disclosure.
Fig. 29 is a perspective view of a pixel array unit according to the fifth embodiment of the present disclosure.
Fig. 30 is a plan view illustrating an example of a schematic structure of an optical circuit board forming a pixel array unit according to a modification of the fifth embodiment of the present disclosure.
Fig. 31 is a perspective view of a pixel array unit according to the modification of the fifth embodiment of the present disclosure.
Fig. 32 is a diagram illustrating how a pixel array unit turns laser light into pulsed light, and transmits the pulsed light to the object, according to a sixth embodiment of the present disclosure.
Fig. 33 is a plan view illustrating an example of a schematic structure of a semiconductor substrate forming a pixel array unit according to a seventh embodiment of the present disclosure.
Fig. 34 is an enlarged plan view of a portion between a charge generation unit and a beam splitter according to the seventh embodiment of the present disclosure.
Fig. 35 illustrates a method for producing a manufacture by bonding an optical circuit board and an electronic circuit board according to an eighth embodiment of the present disclosure (part 1).
Fig. 36 illustrates a method for producing a manufacture by bonding an optical circuit board and an electronic circuit board according to the eighth embodiment of the present disclosure (part 2).
Fig. 37 is a plan view illustrating an example of a schematic structure of a semiconductor substrate forming a pixel array unit according to a ninth embodiment of the present disclosure.
Fig. 38 is a schematic configuration diagram illustrating an example of a circulator according to the ninth embodiment of the present disclosure.
Fig. 39 is a plan view illustrating an example of an operation of the circulator according to the ninth embodiment of the present disclosure.
Fig. 40 is a plan view illustrating an example of a modulator according to the ninth embodiment of the present disclosure.
Fig. 41 is a block diagram depicting an example of schematic configuration of a vehicle control system.
Fig. 42 is a diagram of assistance in explaining an example of installation positions of an outside-vehicle information detecting section and an imaging section.

### MODE FOR CARRYING OUT THE INVENTION

The following is a description of embodiments of the present disclosure, with reference to the drawings. In the description of the drawings referred to in the following description, the same or similar parts are denoted by the same or similar reference signs, and repetitive explanation is not made. However, it should be noted that the drawings are schematic, and the relationship between thickness and planar dimension, the proportion of thickness of each device or each member, and the like differ from actual ones. Therefore, specific thicknesses and dimensions should be determined in consideration of the following description. Also, it goes without saying that dimensional relationships and ratios are partly different between the drawings.

Furthermore, definition of directions such as upward and downward in the following description is merely the definition for convenience of explanation, and does not limit the technical idea of the present disclosure. For example, it goes without saying that if a target is observed while being rotated by 90°, the upward and downward directions are converted into rightward and leftward directions, and if the target is observed while being rotated by 180°, the upward and downward directions are inverted.

Note that the effects described in the present specification are merely examples and are not limited, and other effects may be provided.

### <First Embodiment>

### (Configuration of a Distance Measuring Device)

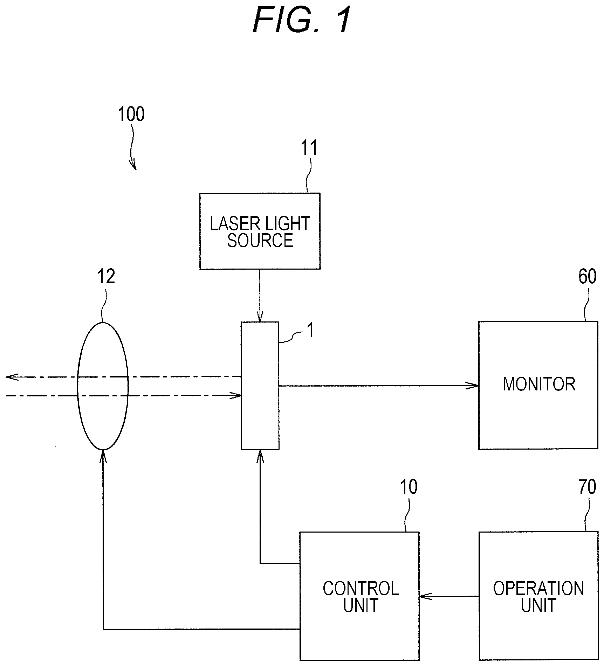

Fig. 1 is a schematic configuration diagram illustrating an example of the configuration of a distance measuring device to which a sensor device according to a first embodiment of the present disclosure is applied.

A distance measuring device 100 according to the first embodiment can be applied to a time of flight (ToF) sensor that measures the distance to an object (subject) on the basis of the time of flight of light, for example. As illustrated in Fig. 1, the distance measuring device 100 also includes a photodetection device 1, a laser light source 11, a lens optical system 12, a control unit 10, a monitor 60, and an operation unit 70. Note that the distance measuring device 100 may include at least the photodetection device 1, the laser light source 11, the control unit 10, the monitor 60, and the operation unit 70. In this case, the lens optical system 12 can be connected to the distance measuring device 100 from the outside.

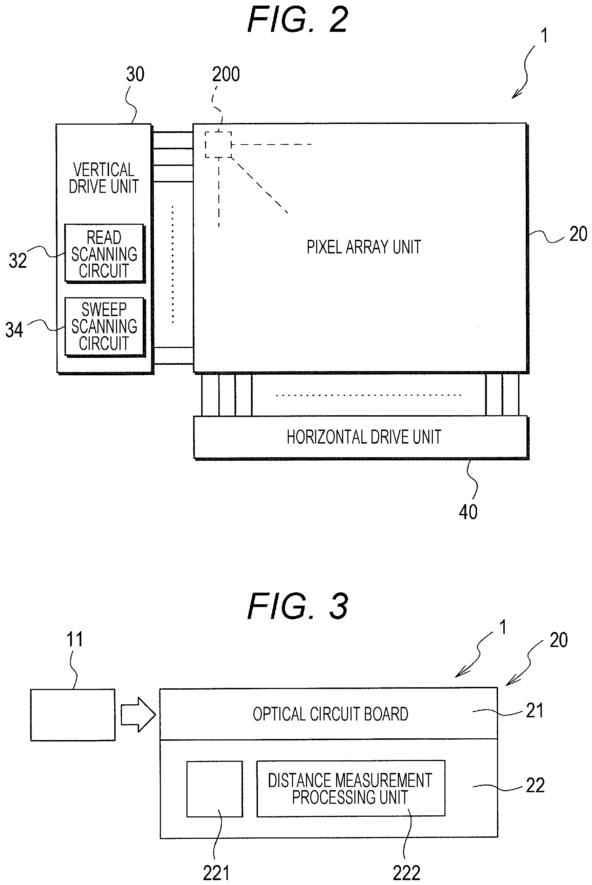

The laser light source 11 is an AlGaAs-based semiconductor laser, for example, and generates laser light having a wavelength X of 940 nm. The lens optical system 12 condenses the laser light emitted from the photodetection device 1, sends the condensed laser light to the object, guides the light from the object to the photodetection device 1, and forms an image on a pixel array unit 20 (shown in Fig. 2) of the photodetection device 1.

Also, the lens optical system 12 performs focus adjustment and drive control for the lens, under the control of the control unit 10. Further, the lens optical system 12 sets the aperture to a designated aperture value, under the control of the control unit 10.

The monitor 60 displays image data obtained by the photodetection device 1. A user (for example, an imaging operator) of the distance measuring device 100 can observe the image data from the monitor 60.

The control unit 10 includes a CPU, a memory and the like, and controls driving of the photodetection device 1 and controls the lens optical system 12 in response to an operational signal from the operation unit 70.

### (Configuration of the Photodetection Device)

Fig. 2 is a diagram illustrating an example of the configuration of the above photodetection device 1. As illustrated in the drawing, the photodetection device 1 includes a pixel array unit 20, a vertical drive unit 30, and a horizontal drive unit 40, for example. Operations of the vertical drive unit 30 and the horizontal drive unit 40 are controlled by the control unit 10.

The pixel array unit 20 includes a plurality of pixels 200 that are arranged in an array (a matrix), and generate and accumulate electric charge in accordance with the intensity of incoming light. As the arrangement of pixels, a Quad arrangement or a Bayer arrangement is known, for example, but the arrangement is not limited to this.

In the drawing, the upward/downward direction of the pixel array unit 20 is referred to as the column direction or the vertical direction, and a rightward/leftward direction is referred to as the row direction or the horizontal direction. Note that details of the configuration of the pixels in the pixel array unit 20 will be described later.

The vertical drive unit 30 includes a shift register and an address decoder (not shown in the drawing). Under the control of the control unit 10, the vertical drive unit 30 sequentially drives the plurality of pixels 200 of the pixel array unit 20 row by row in the vertical direction, for example. In the present disclosure, the vertical drive unit 30 may include a read scanning circuit 32 that performs scanning for reading a signal, and a sweep scanning circuit 34 that performs scanning for sweeping (resetting) unnecessary electric charge from photoelectric conversion elements.

The read scanning circuit 32 sequentially and selectively scans the plurality of pixels 200 of the pixel array unit 20 row by row, to read a signal based on the electric charge from each pixel 200.

The sweep scanning circuit 34 performs sweep scanning on a read row on which a read operation is to be performed by the read scanning circuit 32, earlier than the read operation by the time corresponding to the operation speed of the electronic shutter. A so-called electronic shutter operation is performed by the sweep scanning circuit 34 sweeping (resetting) the unnecessary charge.

The horizontal drive unit 40 includes a shift register and an address decoder (not shown in the drawing). Under the control of the control unit 10, the horizontal drive unit 40 sequentially drives the plurality of pixels 200 of the pixel array unit 20 column by column in the horizontal direction, for example. When the vertical drive unit 30 and the horizontal drive unit 40 selectively drive a pixel, a signal based on the electric charge accumulated in the selected pixel 200 is output to a distance measurement processing unit that will be described later.

### (Cross-Sectional Structure of the Photodetection Device)

Fig. 3 is a cross-sectional diagram illustrating an example of a schematic structure of the pixel array unit 20 according to the first embodiment of the present disclosure.

As illustrated in the drawing, the pixel array unit 20 includes an optical circuit board 21 that is formed with silicon oxide (SiO2) and serves as an optical circuit unit, and an electronic circuit board 22 that is formed with silicon (Si) and serves as an electronic circuit unit, for example. These boards are stacked to constitute the pixel array unit 20. The electronic circuit board 22 is stacked on the surface of the optical circuit board 21 on the opposite side from the surface to be irradiated with laser light. Further, the electronic circuit board 22 includes a charge generation unit 221 as a light receiving unit, and a distance measurement processing unit 222. The charge generation unit 221 and the distance measurement processing unit 222 constitute an indirect-ToF (iToF) sensor or a direct-ToF (dToF) sensor, for example.

The charge generation unit 221 is provided for each pixel 200, and generates and accumulates electric charge in accordance with the intensity of light transmitted through the optical circuit board 21. The distance measurement processing unit 222 performs a distance measurement process for calculating the distance to the object, on the basis of an electric signal photoelectrically converted by the charge generation unit 221.

### (Planar Structure of the Optical Circuit Board)

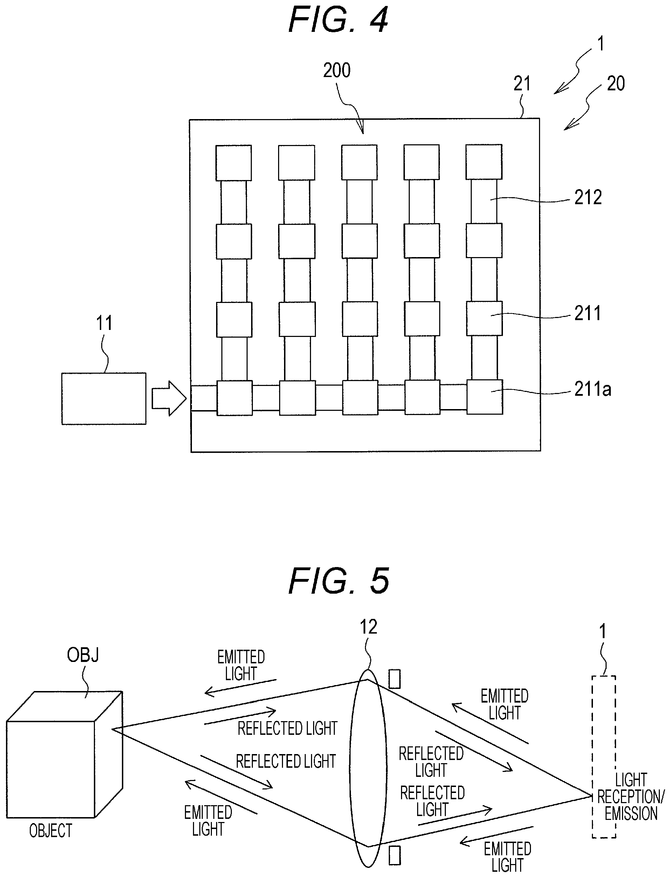

Fig. 4 is a plan view illustrating an example of a schematic structure of the optical circuit board 21 according to the first embodiment of the present disclosure.

The optical circuit board 21 includes, for each pixel 200, an optical switch 211 as an irradiation unit that emits laser light to the object. Further, a waveguide 212 that guides the laser light generated from the laser light source 11 to the optical switch 211 for each pixel 200 is formed on the optical circuit board 21.

### (Operation According to the First Embodiment)

Fig. 5 is a diagram for explaining the principle of retrograde light beams. The optical path in a case where a light beam travels from left to right coincides with the optical path in a case where a light beam travels from right to left. That is, since both of the light beams have the same optical path, the light beams retrograde.

By performing focusing with the lens optical system 12, light emitted from the photodetection device 1 capable of receiving and emitting light can be condensed at an object OBJ. The light reflected diffusely or reflected at the condensing point on the object OBJ turns back through the same optical path, and reaches the same lens optical system 12. Here, because of the principle of retrograde light, light travels in the same optical path and is condensed at substantially the same position as the emitting point of the photodetection device 1 capable of emitting and receiving light. That is, the emitting point and the light receiving point coincide with each other. However, even if light is emitted in a dot-like shape, the condensing spot spreads and condenses light on the object OBJ, since the lens optical system 12 has a diffraction limit and a lens aberration. Note that, to condense light, it is necessary to perform focusing in advance. As a focusing function, for example, an image plane phase difference may be used for focusing the reflected light from the object OBJ. Also, as illustrated in Fig. 5, even if light emitted upward from the photodetection device 1 has an angular distribution, the light is condensed at a desired position on the object OBJ by the lens optical system 12.

Further, on the photodetection device 1 capable of receiving and emitting returning light, the light condensing spot spreads and condenses light on the basis of a similar principle. Accordingly, even if the charge generation unit 221 is located at an adjacent position that differs from the emitting point, light can be received. Such a system can simultaneously obtain high-resolution images for accurate focusing. Also, as all the light that has passed through the lens opening to be condensed by the lens optical system 12 gathers in the charge generation unit 221, a highly sensitive image can be obtained. Further, the position information about the measurement point of the image accurately match the distance and velocity information at the position. That is, highly accurate position, distance, and velocity information can be obtained.

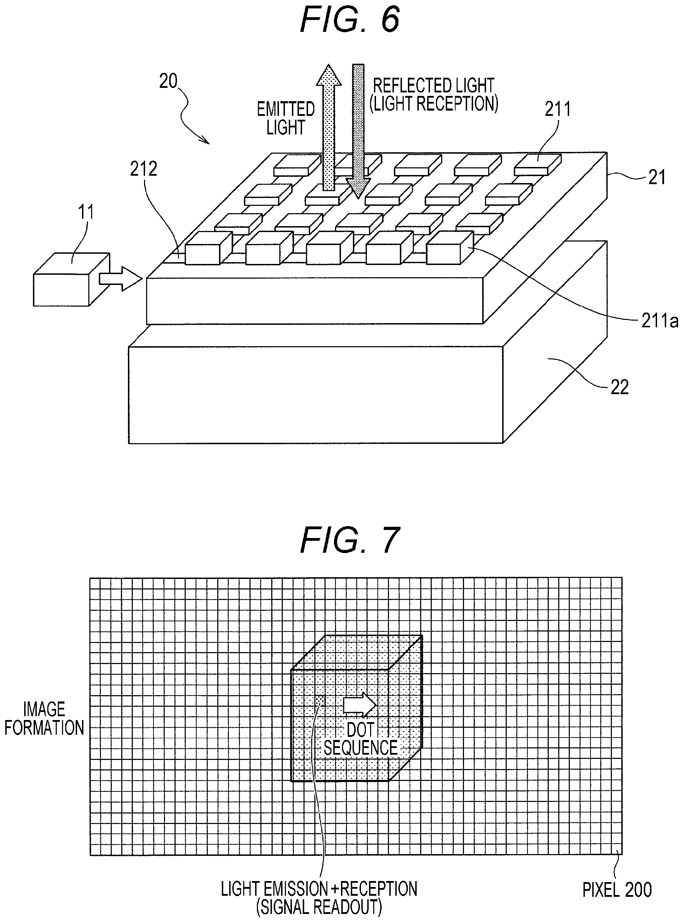

In the first embodiment, laser light generated from the laser light source 11 is emitted substantially in a vertical direction above each pixel 200 by the waveguide 212 and the optical switch 211, as illustrated in Fig. 6. Here, the laser light is emitted in a dot sequence, and the laser light emitted vertically from the optical circuit board 21 is focused on the object OBJ by the lens optical system 12 located in an upper layer and irradiates the object OBJ in a dot-like manner.

The condensed light travels in the same optical path by diffuse reflection, and returns through the same lens optical system 12. At this point of time, the light returns substantially to the position of the pixel 200 that has emitted the light. The light passes through the optical circuit board 21, which is an upper transparent layer at this point of time, and then enters the lower electronic circuit board 22. On the electronic circuit board 22, the charge generation units 221 are in a two-dimensional array. Accordingly, the image illustrated in Fig. 7 can be acquired, and laser light emitted from the optical switch 211 in the upper layer of each pixel 200 is optically detected by the charge generation unit 221 of the pixel 200. At this point of time, the distance to the object OBJ is measured in the reciprocation time of the laser light.

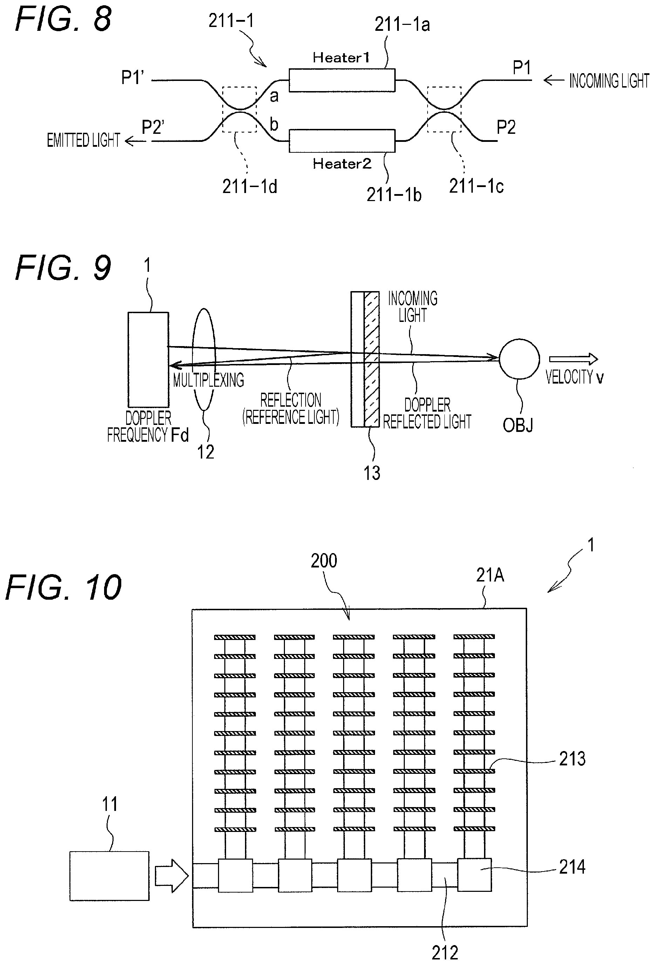

Note that, as illustrated in Fig. 8, the optical switch 211 may be a Mach-Zehnder optical switch 211-1 (see page 14 of https://arxiv.org/pdf/2008.02411.pdf), for example. The Mach-Zehnder optical switch 211-1 includes waveguides a and b that have the same length and are equipped with heaters 211-1a and 211-1b as thermooptical phase shifters, and two directional couplers 211-1c and 211-1d. The optical switch 211-1 then performs a switching operation by heating one of heaters 211-1a and 211-1b through electric control. When the heaters 211-1a and 211-1b are in an off-state, light that has entered from an input port P1 branches into the two waveguides a and b at the same intensity through the directional coupler 211-1c. At this point of time, the light that has moved into the waveguide b is shifted in phase by n/2 with respect to the light in the waveguide a. At the time of merging at the directional coupler 211-1d on the output side, the light in the waveguide a and the light in the waveguide b cancel each other out and are not output to an output port P1', but are output from an output port P2'. When one of the heaters 211-1a and 211-1b is turned on to generate a phase difference π between the two waveguides a and b, on the other hand, the light that has entered from the input port P1 can be switched to a bar state and is output from the output port P1' (see 3.1 Symmetric Mach-Zehnder Optical Switch in https://annex.jsap.or.jp/photonics/kogaku/public/21-08-kaisetsu2.pdf).

Alternatively, the optical switch 211 may be a micron-sized mirror or shutter using the micromachine technology. It is possible to change the path of light by controlling the driving of a micron-sized mirror or shutter for the propagating light beam. As such an optical switch 211 is disposed in each pixel 200, laser light can be freely emitted in a suitable manner for each pixel 200.

Also, the photodetection device 1 may be applied to a laser Doppler system illustrated in Fig. 9, for example. In this system, reference light reflected by a semi-reflective mirror 13 and Doppler reflected light reflected by the object OBJ are multiplexed, and the beat signal is read, so that the velocity of the object can be measured. This measuring operation can be performed by controlling the position at which light is emitted from the surface of the photodetection device 1 with the optical switch 211 (for example, light is scanned by point sequential driving or line sequential driving). All the pixels 200 are driven eventually.

### <Effects of the First Embodiment>

As described above, according to the first embodiment, focusing is performed with the lens optical system 12, so that laser light emitted from the optical switch 211 can be condensed on the object OBJ, the light reflected diffusely or reflected at the condensing point on the object OBJ reaches the same lens optical system 12, and the condensing spot spreads and condenses light substantially at the same position as the emitting point. According to this principle, the optical switch 211 and the charge generation unit 221 are disposed on the optical axis of the lens optical system 12, so that light can be received even if the charge generation unit 221 is located at an adjacent position that differs from the emitting point of the optical switch 211. Further, as the optical switch 211 and the charge generation unit 221 are disposed at the same position, it is possible to reduce the size and the costs of the device.

Also, according to the first embodiment, each pixel 200 includes the optical switch 211 and the charge generation unit 221, so that the positions of the emitting point and the light receiving point of laser light substantially coincide with each other in each pixel 200, and accurate position information and a high-resolution signal can be obtained. Further, the position information about the measurement point of each pixel 200 accurately matches the distance and velocity information at the position, and highly accurate position, distance, and velocity information can be obtained.

### <First Modification of the First Embodiment>

Next, a first modification of the first embodiment is described. The first modification is a modification of the first embodiment, and line sequential driving of each pixel column is described herein.

Fig. 10 is a plan view illustrating an example of a schematic structure of the optical circuit board 21 according to the first modification of the first embodiment. Note that, in Fig. 10, the same components as those in Fig. 4 described above are denoted by the same reference signs as those in Fig. 4, and detailed explanation thereof is not made herein.

An optical circuit board 21A includes a diffraction grating 213 as an irradiation unit for one column of pixels 200. Further, on the optical circuit board 21A, a waveguide 212 that selectively guides laser light generated from the laser light source 11 to the diffraction grating 213 via an optical switch 214 is formed.

### (Operation According to the First Modification of the First Embodiment)

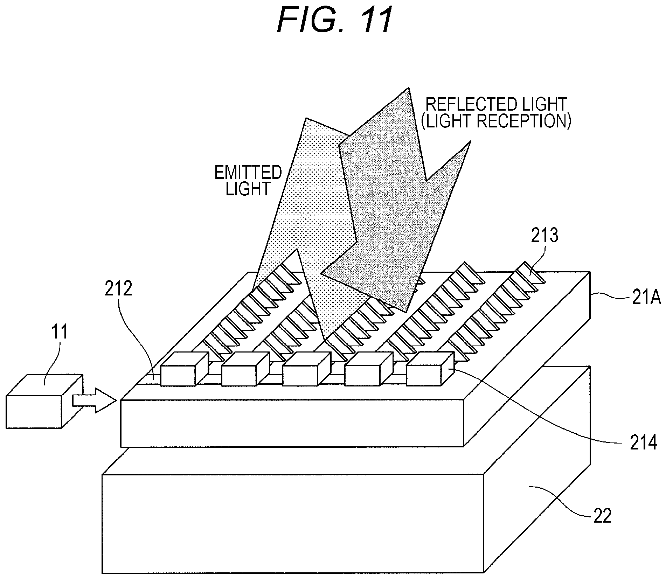

In the first modification, laser light generated from the laser light source 11 is emitted substantially in a vertical direction above each pixel 200 by the waveguide 212, the optical switch 214, and the diffraction grating 213, as illustrated in Fig. 11.

In particular, light is emitted in a row from a column of pixels 200 by the diffraction grating 213. Next, the light is condensed in a line on the object OBJ by the lens optical system 12 located on the upper side. The laser light diffusely reflected on the object OBJ and returned in the same optical path is also condensed in a row in the same column of pixels 200 by the same lens optical system 12. Accordingly, the charge generation units 221 in the same pixel column can also be line-sequentially driven substantially at the same time. All the pixels 200 are driven eventually.

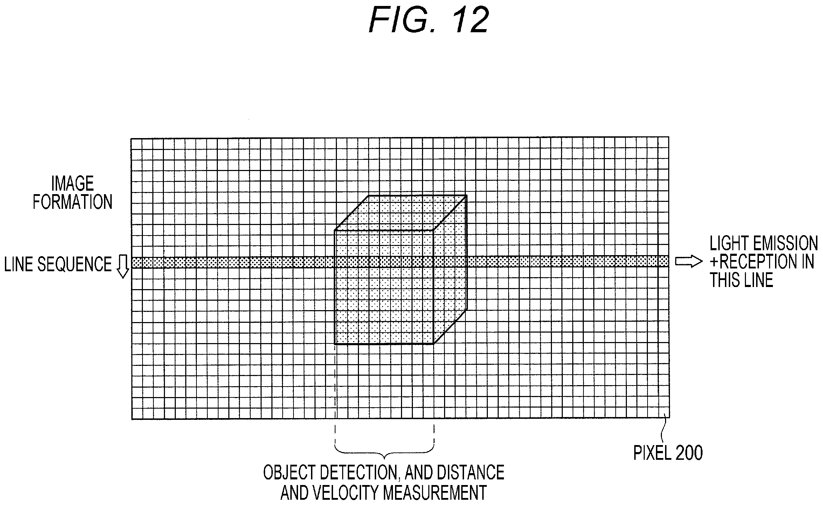

The light passes through the optical circuit board 21, which is an upper transparent layer at this point of time, and then enters the lower electronic circuit board 22. On the electronic circuit board 22, the charge generation units 221 are in a two-dimensional array. Accordingly, the image illustrated in Fig. 12 can be acquired, and laser light emitted from the optical switch 211 in the upper layer of each pixel 200 is optically detected by the charge generation unit 221 of the pixel 200. At this point of time, the distance measurement processing unit 222 measures the distance to the object OBJ in the reciprocation time of the laser light.

### <Second Modification of the First Embodiment>

Next, a second modification of the first embodiment is described. The second modification is a modification of the first embodiment, and plane sequential driving of the respective pixels is described herein.

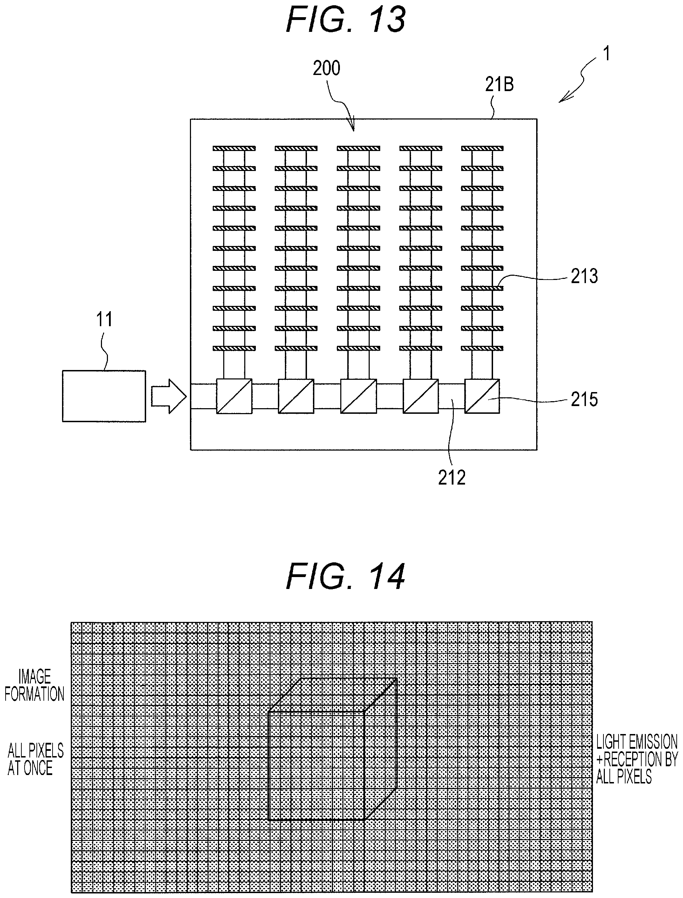

Fig. 13 is a plan view illustrating an example of a schematic structure of the optical circuit board 21 according to the second modification of the first embodiment. Note that, in Fig. 13, the same components as those in Fig. 10 described above are denoted by the same reference signs as those in Fig. 10, and detailed explanation thereof is not made herein.

On an optical circuit board 21B, a waveguide 212 that selectively guides laser light generated from the laser light source 11 to a diffraction grating 213 via a beam splitter 215 is formed. The beam splitter 215 is designed to divide laser light into two.

### (Operation According to the Second Modification of the First Embodiment)

In the second modification, laser light generated from the laser light source 11 is emitted substantially in a vertical direction above each pixel 200 by the waveguide 212, the beam splitter 215, and the diffraction grating 213. In this case, the light is simultaneously emitted upward by a plurality of diffraction gratings 213, and thus, the light is emitted in a planar shape.

At this point of time, the laser light reflected by the object OBJ and returned is also in a planar shape. The laser light emitted vertically from the positions of the respective pixels 200 of the optical circuit board 21B is focused on the object OBJ by the lens optical system 12 located in an upper layer, and irradiates the object OBJ in a planar manner. The light condensed in a planar shape is diffusely reflected on the object OBJ, and returns through the same optical path and the same lens optical system 12.

At this point of time, the light emitted by the respective pixels 200 returns substantially to the positions of the pixels 200 that have emitted the light. The light then passes through the optical circuit board 21B, which is an upper transparent layer, and enters the lower electronic circuit board 22. On the electronic circuit board 22, the charge generation units 221 are in a two-dimensional array. Accordingly, the image illustrated in Fig. 14 can be acquired, and laser light emitted from the diffraction grating 213 in the upper layer of each pixel 200 is optically detected by the charge generation unit 221 of the pixel 200. At this point of time, the distance measurement processing unit 222 measures the distance to the object OBJ in the reciprocation time of the laser light.

Note that, although a case where all the areas are driven has been described herein, one area may be first driven, and the rest of the areas may be sequentially driven. In this case, all the pixels are driven eventually.

### <Second Embodiment>

Next, a second embodiment is described. The second embodiment is a modification of the first embodiment, and a case where an optical circuit board and an electronic circuit board are formed as one substrate is described herein.

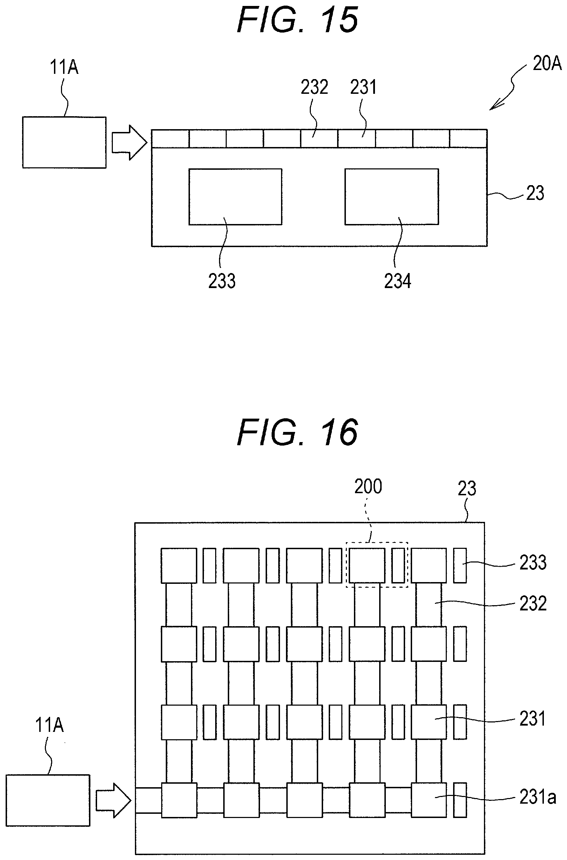

Fig. 15 is a cross-sectional diagram illustrating an example of a schematic structure of a pixel array unit 20A according to the second embodiment of the present disclosure.

As illustrated in the drawing, the pixel array unit 20A includes one silicon (Si) substrate 23, for example. An optical switch 231 as an irradiation unit and a waveguide 232 that guides laser light to the optical switch 231 are formed on the light incident surface of the substrate 23.

The substrate 23 also includes a charge generation unit 233 as a light receiving unit, and a distance measurement processing unit 234.

The charge generation unit 233 is provided for each pixel 200, and generates and accumulates electric charge in accordance with the intensity of light that has entered the light incident surface of the substrate 23. The distance measurement processing unit 234 performs a distance measurement process for calculating the distance to the object, on the basis of an electric signal photoelectrically converted by the charge generation unit 233.

A laser light source 11A is an InGaAs-based semiconductor laser, for example, and generates laser light having a wavelength X of 1550 nm.

### (Planar Structure of the Substrate)

Fig. 16 is a plan view illustrating an example of a schematic structure of the substrate 23 according to the second embodiment of the present disclosure.

The substrate 23 includes, for each pixel 200, an optical switch 231 as an irradiation unit that emits laser light to the object, and a charge generation unit 233 as a light receiving unit. Further, a waveguide 212 that guides the laser light generated from the laser light source 11A to the optical switch 231 for each pixel 200 is formed on the substrate 23. In this case, the laser light is guided to the optical switch 231 for each pixel 200 via an optical switch 231a.

### (Operation According to the Second Embodiment)

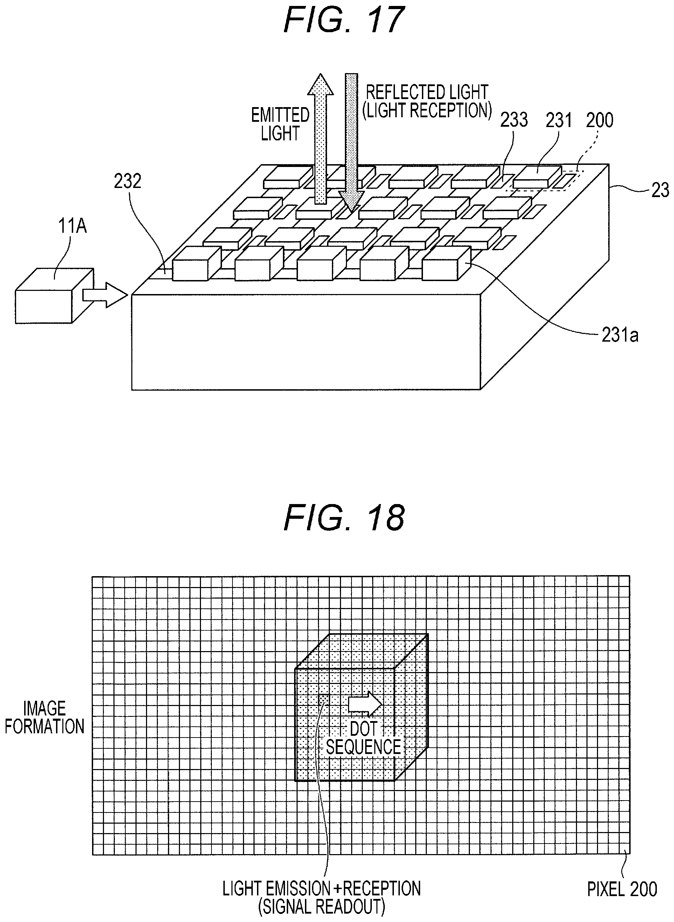

In the second embodiment, laser light generated from the laser light source 11A is emitted substantially in a vertical direction above each pixel 200 by the waveguide 232 and the optical switches 231 and 231a, as illustrated in Fig. 17. Here, the laser light is emitted in a dot sequence, and the laser light emitted vertically from the substrate 23 is focused on the object OBJ by the lens optical system 12 located in an upper layer and irradiates the object OBJ in a dot-like manner.

The condensed light travels in the same optical path by diffuse reflection, and returns through the same lens optical system 12. At this point of time, the light returns substantially to the position of the pixel 200 that has emitted the light. At this point of time, the light enters the charge generation unit 233. On the substrate 23, the charge generation units 233 are in a two-dimensional array, and accordingly, the image illustrated in Fig. 18 can be acquired. At this point of time, the distance measurement processing unit 234 measures the distance to the object OBJ in the reciprocation time of the laser light.

Note that, as illustrated in Fig. 8, for example, the optical switch 231 may be a Mach-Zehnder optical switch 211-1. Alternatively, the optical switch 231 may be a micron-sized mirror or shutter using the micromachine technology. It is possible to change the path of light by controlling the driving of a micron-sized mirror or shutter for the propagating light beam. As such an optical switch 231 is disposed in each pixel 200, laser light can be freely emitted in a suitable manner for each pixel 200.

Also, the photodetection device 1 may be applied to a laser Doppler system illustrated in Fig. 9, for example. In this system, reference light reflected by a semi-reflective mirror 13 and Doppler reflected light reflected by the object OBJ are multiplexed, and the beat signal is read, so that the velocity of the object can be measured. This measuring operation can be performed by controlling the position at which light is emitted from the surface of the photodetection device 1 with the optical switch 231 (for example, light is scanned by point sequential driving or line sequential driving). All the pixels 200 are driven eventually.

### <Effects of the Second Embodiment>

As described above, according to the second embodiment, effects similar to those of the first embodiment can be achieved, and the optical circuit board 21 and the electronic circuit board 22 are formed into one substrate 23. Thus, bonding is not required, and a cost advantage is achieved. Note that, although the substrate 23 is a silicon substrate herein, the substrate 23 may be a silicon on insulator (SOI) substrate or an InP substrate.

### <First Modification of the Second Embodiment>

Next, a first modification of the second embodiment is described. The first modification is a modification of the second embodiment, and line sequential driving of each pixel column is described herein.

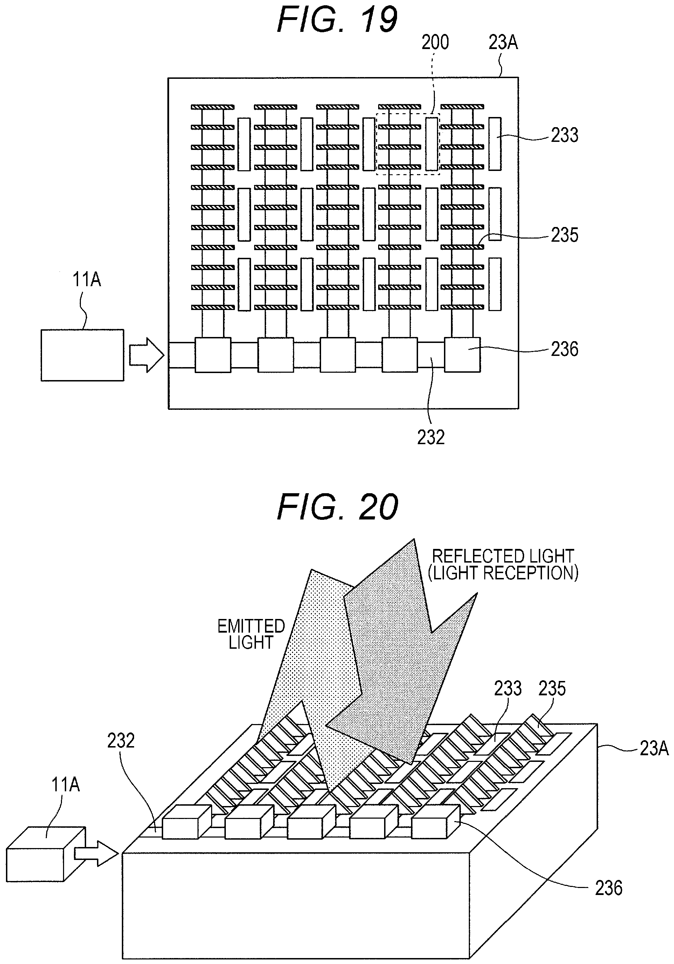

Fig. 19 is a plan view illustrating an example of a schematic structure of a substrate 23A according to the first modification of the second embodiment. Note that, in Fig. 19, the same components as those in Fig. 16 described above are denoted by the same reference signs as those in Fig. 16, and detailed explanation thereof is not made herein.

The substrate 23A includes a diffraction grating 235 as an irradiation unit for one column of pixels 200. Further, on the substrate 23A, a waveguide 232 that selectively guides laser light generated from the laser light source 11A to the diffraction grating 235 via an optical switch 236 is formed.

### (Operation According to the First Modification of the Second Embodiment)

In the first modification, laser light generated from the laser light source 11A is emitted substantially in a vertical direction above each pixel 200 by the waveguide 232, the optical switch 236, and the diffraction grating 235, as illustrated in Fig. 20.

In particular, light is emitted in a row from a column of pixels 200 by the diffraction grating 235. Next, the light is condensed in a line on the object OBJ by the lens optical system 12 located on the upper side. The laser light diffusely reflected on the object OBJ and returned in the same optical path is also condensed in a row in the same column of pixels 200 by the same lens optical system 12. Accordingly, the charge generation units 233 in the same pixel column can also be line-sequentially driven substantially at the same time. All the pixels 200 are driven eventually.

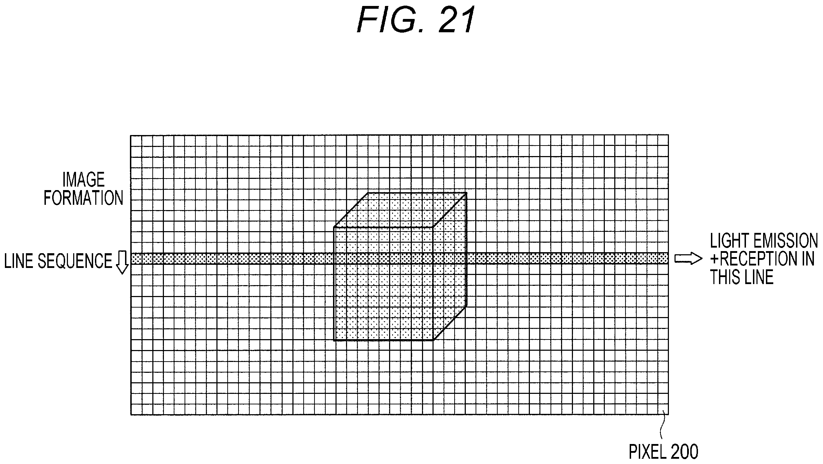

At this point of time, on the substrate 23, the charge generation units 233 are in a two-dimensional array, and accordingly, the image illustrated in Fig. 21 can be acquired. At this point of time, the distance measurement processing unit 234 measures the distance to the object OBJ in the reciprocation time of the laser light.

### <Second Modification of the Second Embodiment>

Next, a second modification of the second embodiment is described. The second modification is a modification of the second embodiment, and plane sequential driving of the respective pixels is described herein.

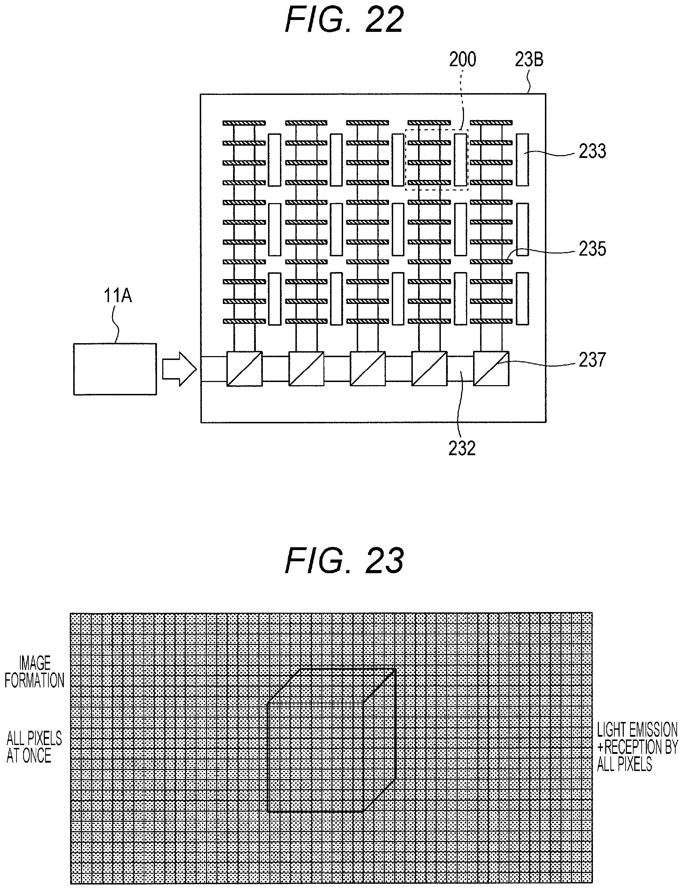

Fig. 22 is a plan view illustrating an example of a schematic structure of a substrate 23B according to the second modification of the second embodiment. Note that, in Fig. 22, the same components as those in Fig. 19 described above are denoted by the same reference signs as those in Fig. 19, and detailed explanation thereof is not made herein.

On the substrate 23B, a waveguide 212 that selectively guides laser light generated from the laser light source 11A to a diffraction grating 235 via a beam splitter 237 is formed. The beam splitter 237 is designed to divide laser light into two.

### (Operation According to the Second Modification of the Second Embodiment)

In the second modification, laser light generated from the laser light source 11A is emitted substantially in a vertical direction above each pixel 200 by the waveguide 232, the beam splitter 237, and the diffraction grating 235. In this case, the light is simultaneously emitted upward by a plurality of diffraction gratings 235, and thus, the light is emitted in a planar shape.

At this point of time, the laser light reflected by the object OBJ and returned is also in a planar shape. The laser light emitted vertically from the positions of the respective pixels 200 of the substrate 23B is focused on the object OBJ by the lens optical system 12 located in an upper layer, and irradiates the object OBJ in a planar manner. The light condensed in a planar shape is diffusely reflected on the object OBJ, and returns through the same optical path and the same lens optical system 12.

At this point of time, the light emitted by the respective pixels 200 returns substantially to the positions of the pixels 200 that have emitted the light. The light then enters the charge generation unit 233 of the pixel 200 that has received the light. On the substrate 23B, the charge generation units 233 are in a two-dimensional array, and accordingly, the image illustrated in Fig. 23 can be acquired. At this point of time, the distance measurement processing unit 234 measures the distance to the object OBJ in the reciprocation time of the laser light.

Note that, although a case where all the areas are driven has been described herein, one area may be first driven, and the rest of the areas may be sequentially driven. In this case, all the pixels are driven eventually.

### <Third Embodiment>

A third embodiment is an embodiment of an FM modulation scheme or an FMCW scheme.

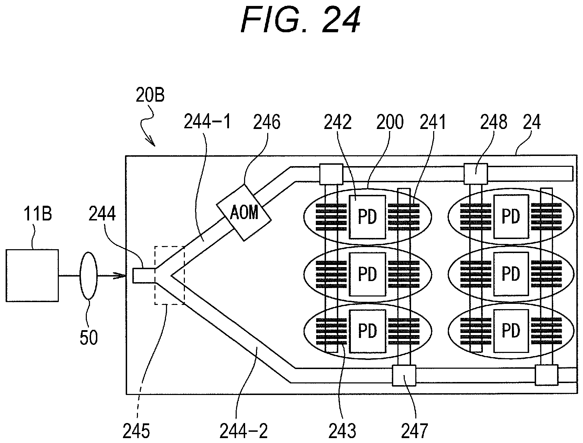

Fig. 24 is a plan view illustrating an example of a schematic structure of a semiconductor substrate 24 forming a pixel array unit 20B according to the third embodiment of the present disclosure.

The semiconductor substrate 24 includes, for each pixel 200, a diffraction grating 241 as an irradiation unit that emits laser light to the object, a charge generation unit (PD) 242 as a light receiving unit, and a diffraction grating 243 that emits FM modulated light obtained by performing FM modulation on the laser light. Further, a waveguide 244 that guides laser light generated from a laser light source 11B to the diffraction grating 241 of each pixel 200 is formed on the semiconductor substrate 24.

The waveguide 244 is branched into two branch waveguides 244-1 and 244-2 by a branching portion 245. The branch waveguide 244-1 includes an FM modulator 246 that performs frequency modulation (FM) on laser light.

The laser light source 11B is an InGAs-based DFB or DBR semiconductor laser, and generates a single-mode laser beam having a wavelength X of 1550 nm. The laser light generated by the laser light source 11B is guided to the waveguide 244 by a collimator lens 50, and is guided to the diffraction grating 241 of each pixel 200 by the branch waveguide 244-2 and an optical switch 247. Meanwhile, the FM modulated light modulated by the FM modulator 246 is guided to the diffraction grating 243 of each pixel 200 by the branch waveguide 244-2 and the optical switch 247.

### (Cross-Sectional Structure of Pixels)

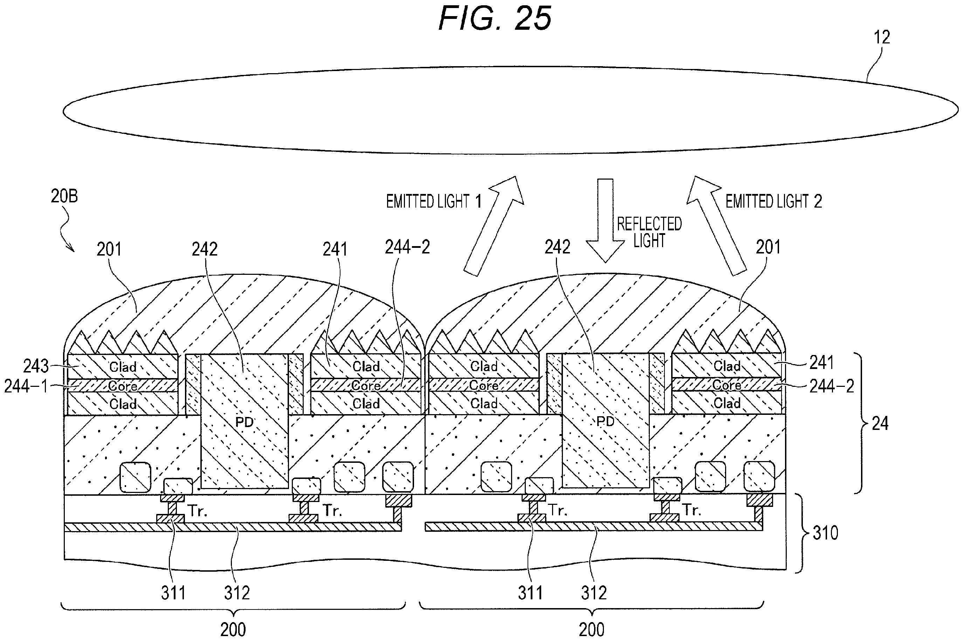

Fig. 25 is a partial cross-sectional view illustrating an example of a schematic structure of pixels 200 according to the third embodiment of the present disclosure.

As illustrated in the drawing, a pixel 200 in the pixel array unit 20B includes an on-chip lens 201, the semiconductor substrate 24, and a wiring layer 310, for example, and these layers are stacked in order. That is, the photodetection device 1 (see Fig. 1) of the present disclosure is a back-illuminated photodetection device in which the wiring layer 310 is provided on the surface of the semiconductor substrate 220 on the opposite side from the surface to be irradiated with laser light. Note that the semiconductor substrate 24 and the wiring layer 310 may be formed as a single substrate.

The on-chip lens 201 condenses laser light emitted from the diffraction grating 241 and the FM modulated light emitted from the diffraction grating 243, emits the condensed light to the lens optical system 12, and condenses incoming light onto the irradiation surface of the semiconductor substrate 220.

The semiconductor substrate 24 includes, for each pixel 200, the charge generation unit (PD) 242 that receive incoming light and accumulate electric charge, and diffraction gratings 241 and 243.

The wiring layer 310 includes a pixel transistor 311 and a metal wiring line 312 that constitute a distance measurement processing unit. The pixel transistor is electrically connected to the charge generation unit 242.

In the pixel 200 having the above-described configuration, light is emitted from the back surface side of the semiconductor substrate 24, the emitted light is transmitted through the on-chip lens 201, and the transmitted light is photoelectrically converted by the charge generation unit 242, to generate electric charge. The generated electric charge is then output, as a pixel signal, through the metal wiring line 312 via the pixel transistor 311 formed in the wiring layer 310.

### (Operation According to the Third Embodiment)

In the third embodiment, a single longitudinal mode (spectrum) is obtained by providing diffraction gratings immediately above the waveguide 244 of a compound semiconductor. Due to the singularity, it is possible to accurately read a beat signal generated due to interference. Laser light emitted from the laser light source 11B is coupled to the waveguide 244 by the collimator lens 50. The waveguide 244 is formed in a Y shape with the branching portion 245, and is capable of demultiplexing light into two beams. The phase of laser light in the waveguide 244-1, which is one of the two, is modulated by an acousto-optic modulator (AOM) that performs refractive index modulation with a sound wave such as the FM modulator 246, an electro-optical modulator that performs modulation by an electro-optical effect, a thermo refractive index modulator using temperature control, or the like.

The phase of laser light in the other waveguide 244-2 is not modulated. The laser light in both waveguides is guided by the waveguides 244-1 and 244-2 to both sides of the charge generation units 242, and is emitted upward from the diffraction gratings 241 and 243, beam splitters, or optical switches located on both sides.

First, the emitting direction is determined by the on-chip lens 201 or a lenticular lens on the device. That is, the light emitted from the left side travels in the rightward direction because of the on-chip lens 201 or the lenticular lens, and the light emitted from the right side travels in the leftward direction because of the on-chip lens 201 or the lenticular lens. Further, the emitted light is divided into emitted light 1 (FM modulated wave) and emitted light 2 (unmodulated wave) by the lens optical system 12 disposed thereon, and is condensed on the object OBJ.

At this point of time, the two waves of the FM modulated wave and the unmodulated wave are multiplexed, to cause interference. The multiplexed light is reflected on the object OBJ, is condensed through the same optical path and the same lens, returns to substantially the position of the pixel that has emitted the light, and enters the charge generation unit 242 of SiGe or InGaAs. Note that the charge generation units 242 are in a two-dimensional array, and can also acquire an image. At this point of time, the distance measurement processing unit can measure the distance to the object OBJ and the velocity of the object OBJ from the beat signal generated due to the interference with the FM modulated wave. Note that, although a silicon (Si) substrate is used herein, an SOI substrate or an InP substrate may be used.

### <Effects of the Third Embodiment>

As described above, according to the third embodiment, single-mode laser light is branched into two, and FM modulation is performed on one beam of the laser light, so that a beat signal generated due to interference can be accurately read, and the distance to the object OBJ and the velocity of the object OBJ can be measured from the beat signal generated due to interference with the FM modulated wave.

Also, in the third embodiment, the semiconductor substrate 24 may include an optical circuit board and an electronic circuit board. In this case, the optical circuit board includes the diffraction grating 241, the diffraction grating 243, and the FM modulator 246, and the electronic circuit board includes the charge generation unit (PD) 242 and the distance measurement processing unit.

### <Fourth Embodiment>

A fourth embodiment is another embodiment of an FM modulation scheme or an FMCW scheme.

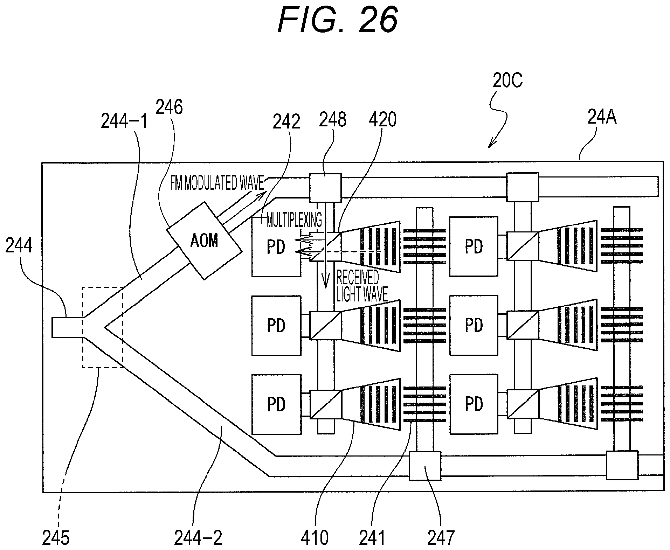

Fig. 26 is a plan view illustrating an example of a schematic structure of a semiconductor substrate 24A forming a pixel array unit 20C according to the fourth embodiment of the present disclosure. In Fig. 26, the same components as those in Fig. 24 are denoted by the same reference signs as those in Fig. 24, and detailed explanation thereof is not made herein.

The semiconductor substrate 24A includes, for each pixel 200, a diffraction grating 241 as an irradiation unit that emits laser light to the object, a charge generation unit (PD) 242 as a light receiving unit, a diffraction grating 410 for light reception, and a beam splitter 420 that multiplexes a received light wave received by the diffraction grating 410 and an FM modulated wave.

### (Cross-Sectional Structure of Pixels)

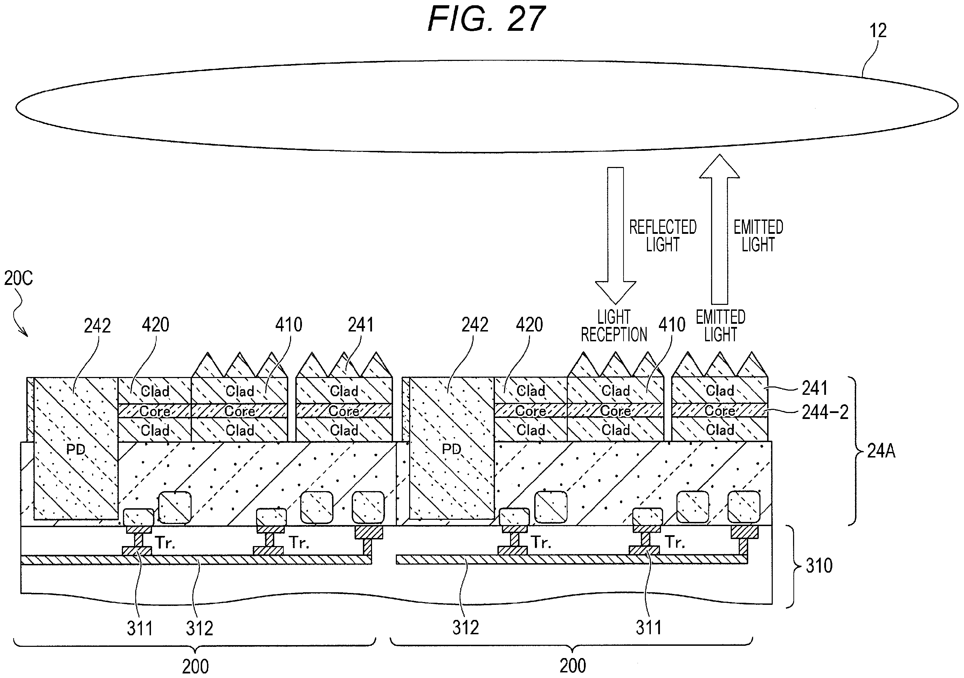

Fig. 27 is a partial cross-sectional view illustrating an example of a schematic structure of pixels 200 according to the fourth embodiment of the present disclosure.

As illustrated in the drawing, a pixel 200 in the pixel array unit 20C includes the semiconductor substrate 24A and a wiring layer 310, for example, and these layers are stacked in order. Note that the semiconductor substrate 24A and the wiring layer 310 may be formed as a single substrate.

The semiconductor substrate 24A includes, for each pixel 200, the charge generation unit (PD) 242 that receive incoming light and accumulate electric charge, and the diffraction grating 241, the diffraction grating 410 for light reception, and the beam splitter 420.

The wiring layer 310 includes a pixel transistor 311 and a metal wiring line 312 that constitute a distance measurement processing unit. The pixel transistor is electrically connected to the charge generation unit 242.

In the pixel 200 having the above-described configuration, light is emitted from the back surface side of the semiconductor substrate 24A, and incoming light is photoelectrically converted by the charge generation unit 242, to generate electric charge. The generated electric charge is then output, as a pixel signal, through the metal wiring line 312 via the pixel transistor 311 formed in the wiring layer 310.

### (Operation According to the Fourth Embodiment)

In the fourth embodiment, a single longitudinal mode (spectrum) is obtained by providing diffraction gratings immediately above the waveguide 244 of a compound semiconductor. Due to the singularity, it is possible to accurately read a beat signal generated due to interference. Laser light emitted from laser light source 11B is made to enter the waveguide 244 by the collimator lens 50. The waveguide 244 is formed in a Y shape with the branching portion 245, and is capable of demultiplexing light into two beams. The phase of laser light in the waveguide 244-1, which is one of the two, is modulated by an acousto-optic modulator (AOM) that performs refractive index modulation with a sound wave such as the FM modulator 246, an electro-optical modulator that performs modulation by an electro-optical effect, a thermo refractive index modulator using temperature control, or the like.

The phase of laser light in the other waveguide 244-2 is not modulated. The laser light not having the phase modulated is guided by the waveguide 244-2 and is emitted upward almost in a vertical direction from the diffraction grating 241 or a beam splitter or an optical switch for light emission. Further, the light is condensed on the object by the lens optical system 12. After that, the light is reflected on the object, returns through the same optical path, and is condensed by the same lens optical system 12. At this point of time, the light returns substantially to the position of the same pixel 200.

Next, the diffraction grating 410 for receiving light exists, and the light received again by the diffraction grating 410 is coupled to the waveguide 244-1 and travels in the waveguide 244-1. Further, the received light and the FM modulated light are multiplexed by the beam splitter 420. At that point of time, a beat signal due to optical interference is generated. Note that the beam splitter 420 herein is used to separate the FM modulated light to be multiplexed with the straight light. The beat signal generated by this multiplexing is detected by the charge generation unit 242 of SiGe or InGaAs.

### <Effects of the Fourth Embodiment>

As described above, according to the fourth embodiment, effects similar to those of the third embodiment described above can be achieved.

Also, in the fourth embodiment, the semiconductor substrate 24A may include an optical circuit board and an electronic circuit board. In this case, the optical circuit board includes the diffraction grating 241, the FM modulator 246, the diffraction grating 410 for light reception, and the beam splitter 420, and the electronic circuit board includes the charge generation unit (PD) 242.

### <Fifth Embodiment>

A fifth embodiment is a modification of the foregoing first embodiment.

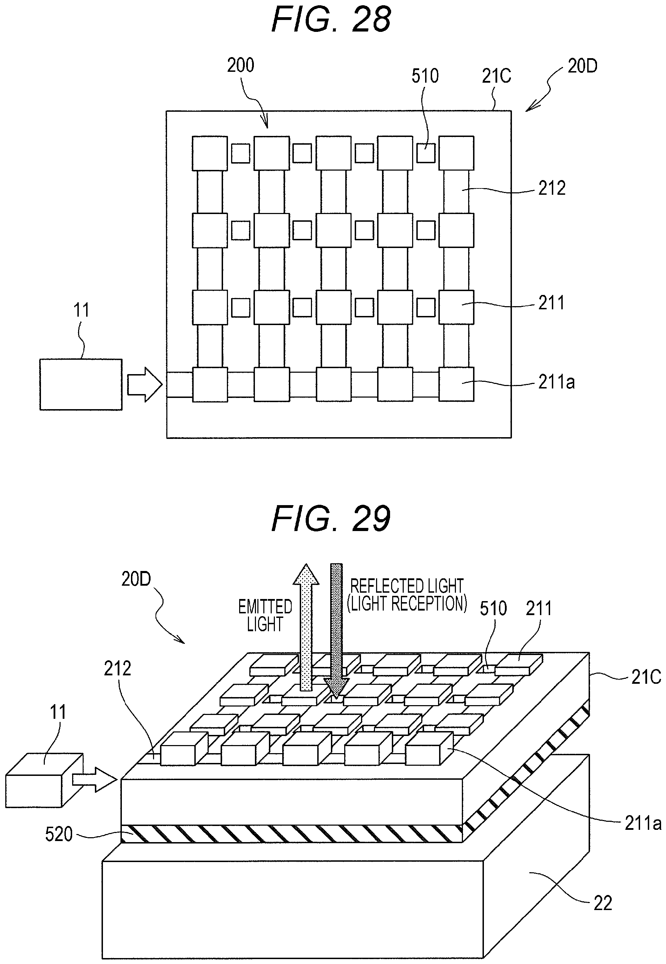

Fig. 28 is a plan view illustrating an example of a schematic structure of an optical circuit board 21C forming a pixel array unit 20D according to the fifth embodiment of the present disclosure. In Fig. 28, the same components as those in Fig. 4 described above are denoted by the same reference signs as those in Fig. 4, and detailed explanation thereof is not made herein.

The optical circuit board 21C includes, for each pixel 200, an optical switch 211 as an irradiation unit that emits laser light to the object. Also, a waveguide 212 that guides the laser light generated from the laser light source 11 to the optical switch 211 for each pixel 200 is formed on the optical circuit board 21C. Further, the laser light is guided to the optical switch 211 of each pixel 200 by an optical switch 211a.

In the optical circuit board 21C, holes 510 are formed at positions on the light incident side of the charge generation units 221. Note that, instead of the holes 510, recesses may be formed.

### (Perspective Structure of the Pixel Array Unit)

Fig. 29 is a perspective view of the pixel array unit 20D according to the fifth embodiment of the present disclosure. In Fig. 29, the same components as those in Fig. 6 described above are denoted by the same reference signs as those in Fig. 6, and detailed explanation thereof is not made herein.

In the optical circuit board 21C, a light shielding film 520 is formed on the surface on the side opposite from the light incident side of the charge generation units 221. The light shielding film 520 may be a metal film of tungsten (W), aluminum (Al), or the like, or a polymer film that absorbs light.

### <Effects of the Fifth Embodiment>

As described above, according to the fifth embodiment, the holes 510 are formed in the optical circuit board 21C that is the layer located on the electronic circuit board 22, and thus, the transmittance of reflected light from the object OBJ becomes higher.

Also, according to the fifth embodiment, the light shielding film 520 is provided on the surface on the opposite side from the light incident side of the optical circuit board 21C, and thus, it is possible to prevent stray light generated by undesired reflection, scattering, diffracted light, or the like in the device.

### <Modification of the Fifth Embodiment>

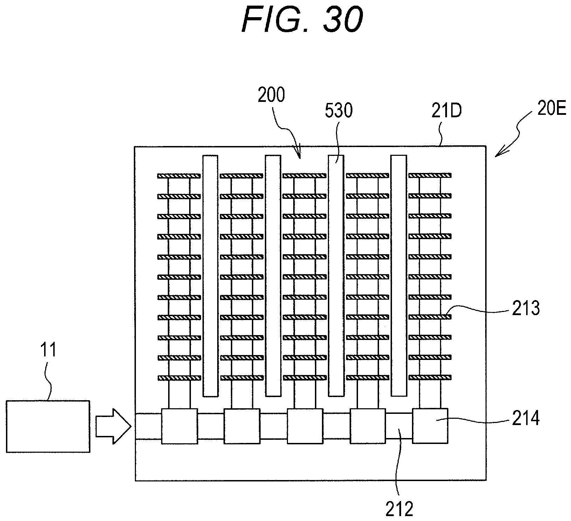

Fig. 30 is a plan view illustrating an example of a schematic structure of an optical circuit board 21D forming a pixel array unit 20E according to a modification of the fifth embodiment of the present disclosure. In Fig. 30, the same components as those in Fig. 10 described above are denoted by the same reference signs as those in Fig. 10, and detailed explanation thereof is not made herein.

The optical circuit board 21D includes a diffraction grating 213 as an irradiation unit for one column of pixels 200. Further, on the optical circuit board 21D, a waveguide 212 that selectively guides laser light generated from the laser light source 11 to the diffraction grating 213 via an optical switch 214 is formed.

In the optical circuit board 21D, a hole 530 is formed at a position on the light incident side of each one column of charge generation units 221. Note that, instead of the holes 530, recesses may be formed.

### (Perspective Structure of the Pixel Array Unit)

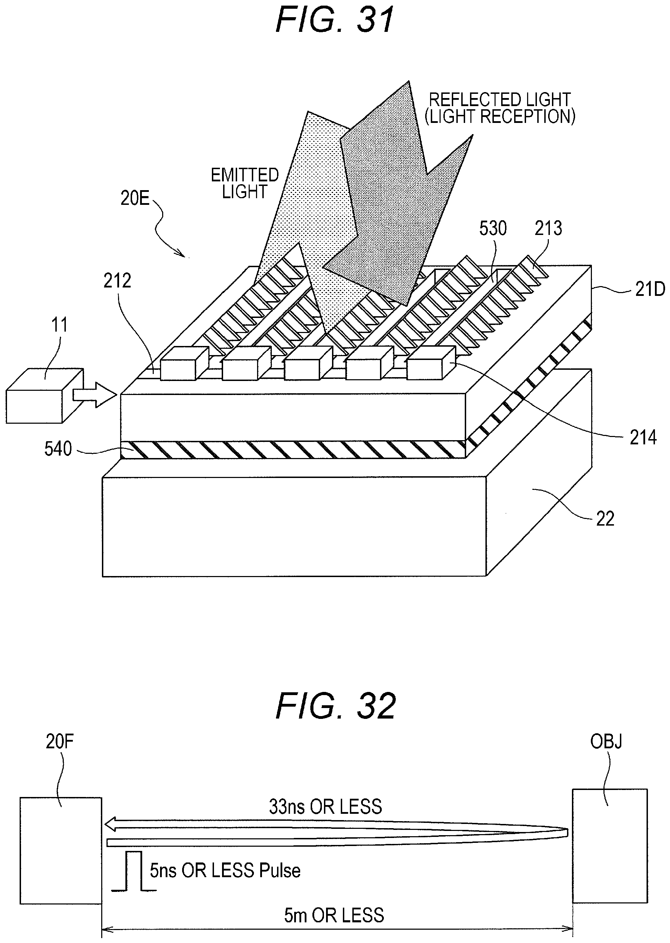

Fig. 31 is a perspective view of the pixel array unit 20E according to the modification of the fifth embodiment of the present disclosure. In Fig. 31, the same components as those in Fig. 11 described above are denoted by the same reference signs as those in Fig. 11, and detailed explanation thereof is not made herein.

In the optical circuit board 21D, a light shielding film 540 is formed on the surface on the side opposite from the light incident side. The light shielding film 540 may be a metal film of tungsten (W), aluminum (Al), or the like, or a polymer film that absorbs light.

### <Sixth Embodiment>

Fig. 32 is a diagram illustrating how a pixel array unit 20F turns laser light into pulsed light, and transmits the pulsed light to the object OBJ, according to a sixth embodiment of the present disclosure.

Undesired reflection, scattering, diffracted light, and the like in the device sometimes occur and generate stray light. Such stray light will turn into signal noise, and therefore, it may be better to avoid it. For example, an embodiment that uses pulsed light to avoid stray light is now described. As illustrated in Fig. 32, for example, the object OBJ exists five meters ahead, and the reciprocation time of light to and from the object OBJ is calculated. Since the reciprocation distance is 10 meters or less, and the light velocity C is 300,000 Km/s, the reciprocation time is 33 nsec. If pulsed light having a width of 5 ns or less is emitted here, for example, the standby time is 28 ns or less. The stray light disappears within this standby time.

Furthermore, in the case of a long distance to the object OBJ, the standby time is longer. Alternatively, the pulse width can be made greater. For example, in the case of 50 meters ahead, the reciprocation time is 330 ns. Even if the pulse width is 300 ns, the standby time is 30 ns. As the pulse width is made greater to a certain extent, FM modulation also becomes possible.

### <Seventh Embodiment>

A seventh embodiment is a modification of the foregoing fourth embodiment.

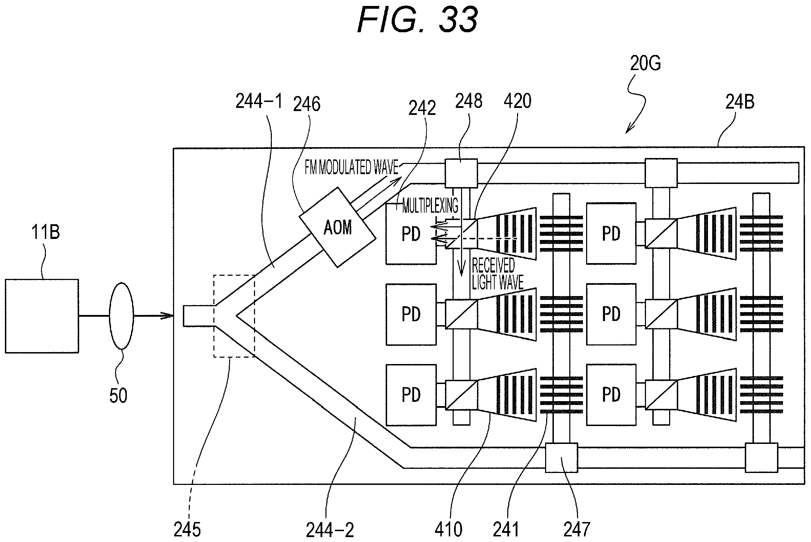

Fig. 33 is a plan view illustrating an example of a schematic structure of a semiconductor substrate 24B forming a pixel array unit 20G according to the seventh embodiment of the present disclosure. In Fig. 33, the same components as those in Fig. 26 are denoted by the same reference signs as those in Fig. 26, and detailed explanation thereof is not made herein.

The semiconductor substrate 24B includes, for each pixel 200, a diffraction grating 241 as an irradiation unit that emits laser light generated from a laser light source 11B to the object OBJ, a charge generation unit (PD) 242 as a light receiving unit, a diffraction grating 410 for light reception, and a beam splitter 420 that multiplexes a received light wave received by the diffraction grating 410 and an FM modulated wave. The semiconductor substrate 24B also includes a distance measurement processing unit.

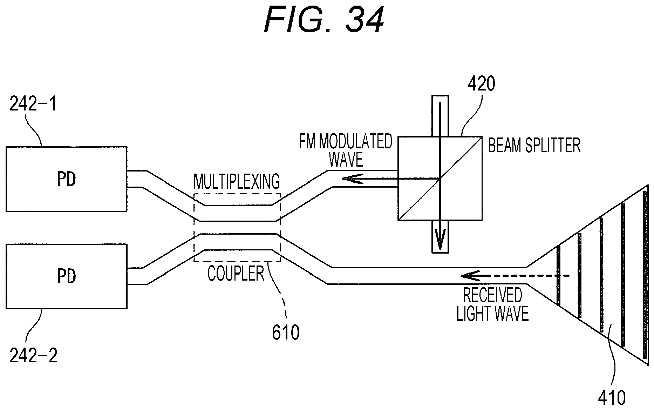

Fig. 34 is an enlarged plan view of a portion between the charge generation unit (PD) 242 and the beam splitter 420.

The semiconductor substrate 24B includes a coupler 610 that multiplexes a received light wave received by the diffraction grating 410 and an FM modulated wave guided by the beam splitter 420.

In the seventh embodiment, a method of reducing noise by devising a method of multiplexing FM modulated light and reflected light from the object OBJ is described. In the seventh embodiment, a modulated wave divided by the beam splitter is made to enter one waveguide, and a received light wave received by the beam splitter 420 is made to enter another waveguide. At this point of time, the waves are multiplexed by the coupler 610 that brings the two waveguides close to each other.

The light beams that have passed through the two waveguides of the coupler 610 are detected by two charge generation units 242-1 and 242-2, respectively. The distance measurement processing unit compares signals from the two charge generation units 242-1 and 242-2, and can remove noise components such as dark current and external light by signal processing or the like. The distance measurement processing unit can also extract only the beat signal generated by multiplexing. Note that, of the light of the modulated wave, components traveling straight through the beam splitter 420 may be divided and crossed, with a distance being kept in the vertical direction so as not to cross the waveguide for the received wave.

### <Effects of the Seventh Embodiment>

As described above, according to the seventh embodiment, reflected light from the object OBJ and FM modulated light are multiplexed by the coupler 610 and are output to the two charge generation units 242-1 and 242-2, and the signals from the two charge generation units 242-1 and 242-2 are compared by the distance measurement processing unit, so that noise components such as dark current and external light can be removed, and only a beat signal generated by the multiplexing can be extracted.

Also, in the seventh embodiment, the semiconductor substrate 24B may include an optical circuit board and an electronic circuit board. In this case, the optical circuit board includes the diffraction grating 241, the diffraction grating 410 for light reception, the beam splitter 420, and the coupler 610, and the electronic circuit board includes the charge generation unit (PD) 242 and the distance measurement processing unit.

### <Eighth Embodiment>

An eighth embodiment is an embodiment of a device manufacturing method.

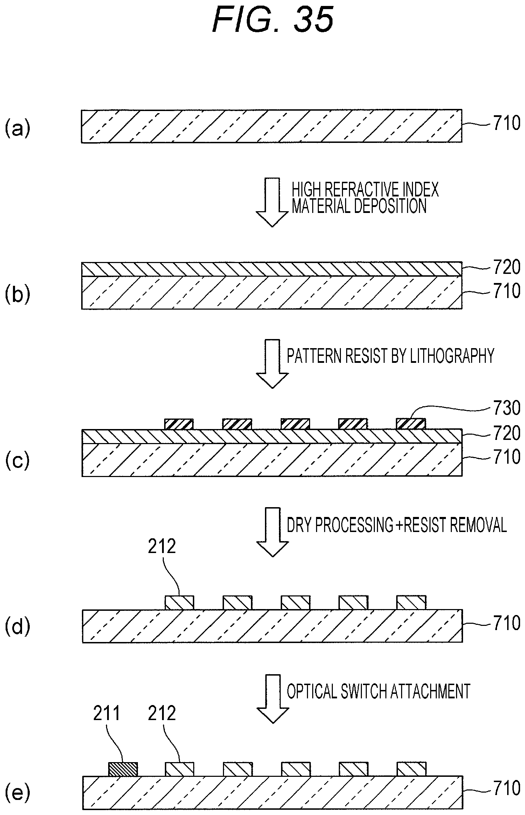

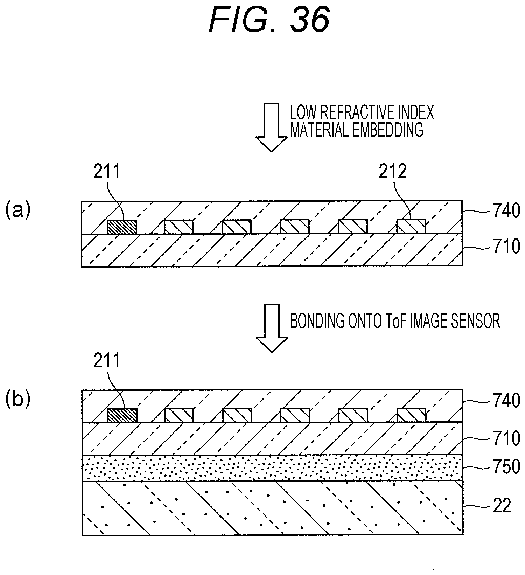

Figs. 35 and 36 illustrate a method for producing a manufacture by bonding an optical circuit board 21 and an electronic circuit board 22 according to the eighth embodiment of the present disclosure.

First, a transparent low refractive index substrate 710 such as quartz or glass is prepared (Fig. 35(a)). As illustrated in Fig. 35(b), a high refractive index film 720 is then deposited on the low refractive index substrate 710 by a method such as CVD or sputtering.

Further, as illustrated in Fig. 35(c), a resist pattern 730 is formed by lithography. As illustrated in Fig. 35(d), after dry processing such as RIE is performed, the resist pattern 730 is then removed, to form high refractive index waveguides 212.

As illustrated in Fig. 35(e), an optical switch 211 of a temperature control type is also formed at the same time. Further, as illustrated in Fig. 36(a), a low refractive index material is embedded by vapor deposition, and a heater 740 is attached to the optical switch unit. Further, as shown in Fig. 36(b), the low refractive index substrate 710 is bonded onto the electronic circuit board 22 with a transparent adhesive 750.

Although the above is a manufacturing method, the optical circuit board 21 and the electronic circuit board 22 can also be formed on the same substrate in the second embodiment through process steps similar to those described above. In this case, the substrate may be a Si substrate or an SOI substrate. Alternatively, the substrate may be an InP substrate.

### <Ninth Embodiment>

A ninth embodiment is a modification of the foregoing seventh embodiment.

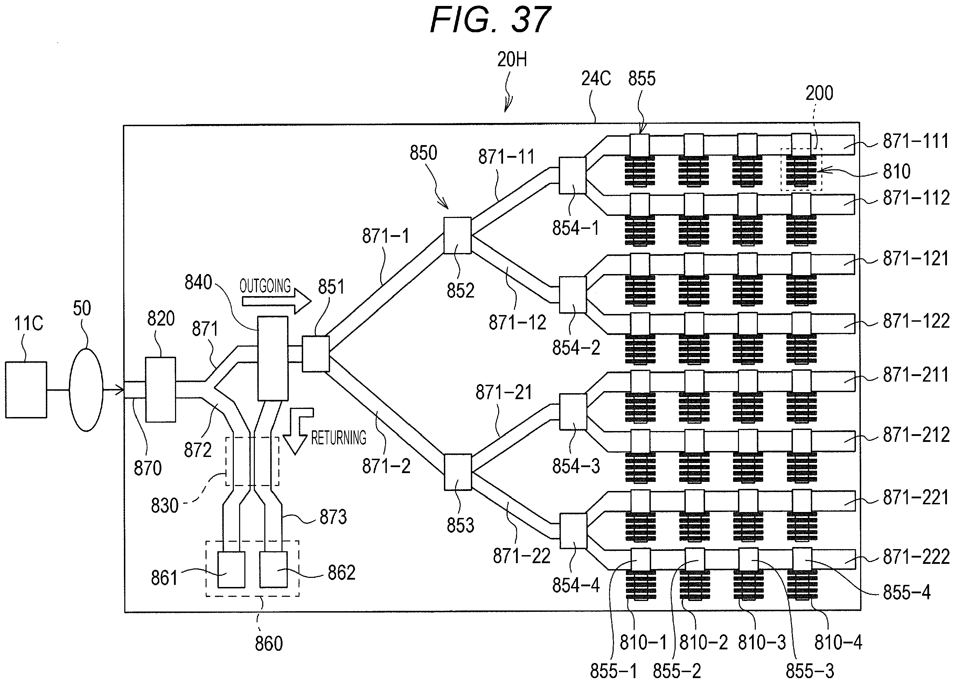

Fig. 37 is a plan view illustrating an example of a schematic structure of a semiconductor substrate 24C forming a pixel array unit 20H according to the ninth embodiment of the present disclosure. In Fig. 37, the same components as those in Fig. 33 are denoted by the same reference signs as those in Fig. 33, and detailed explanation thereof is not made herein.

The semiconductor substrate 24C includes, for each pixel 200, a diffraction grating 810 that has a function of emitting laser light to the object OBJ, and a function of receiving reflected light from the object OBJ. The semiconductor substrate 24C also includes a modulator 820, a coupler 830 as a multiplexing unit, a circulator 840 as a lead-out unit, a plurality of optical switches 850, and a balanced photodiode 860 as a light receiving unit. The semiconductor substrate 24C also includes a distance measurement processing unit.

The modulator 820 is provided in a waveguide 870. The waveguide 870 branches into two waveguides 871 and 872. Of these waveguides, the waveguide 871 is provided with the circulator 840 and an optical switch 851 of the plurality of optical switches 850. On the other hand, the waveguide 872 is provided with the coupler 830 and the balanced photodiode 860 as a light receiving unit.

The circulator 840 is connected with a waveguide 873 for leading light incoming from one input end to the coupler 830. The waveguide 871 is branched into two waveguides 871-1 and 871-2 by the optical switch 851.

Of these waveguides, the waveguide 871-1 is branched into two waveguides 871-11 and 871-12 by an optical switch 852. On the other hand, the waveguide 871-2 is branched into two waveguides 871-21 and 871-22 by an optical switch 853.

The waveguide 871-11 is further branched into two waveguides 871-111 and 871-112 by an optical switch 854-1. The waveguide 871-12 is further branched into two waveguides 871-121 and 871-122 by an optical switch 854-2. The waveguide 871-21 is further branched into two waveguides 871-211 and 871-212 by an optical switch 854-3. The waveguide 871-22 is further branched into two waveguides 871-221 and 871-222 by an optical switch 854-4.

Each of the waveguides 871-111, 871-112, 871-121, 871-122, 871-211, 871-212, 871-221, and 871-222 is provided with a plurality of (four in Fig. 37, for example) optical switches 855 for leading light that has entered each waveguide to the diffraction gratings 810 for the respective pixels 200.

In the ninth embodiment, laser light emitted from a laser light source 11C is made to enter the waveguide 870 by a collimator lens 50. The laser light that has entered the waveguide 870 is modulated by the modulator 820. The modulated light emitted from the modulator 820 passes through the circulator 840 via the waveguide 871, reaches the optical switch 851, and is also made to enter the coupler 830 via the waveguide 872.

Here, in a case where light is emitted from a diffraction grating 810-4 on the side of the waveguide 871-222, for example, the modulated light emitted from the circulator 840 is led out to the waveguide 871-2 by the optical switch 851, is led out to the waveguide 871-22 by the optical switch 853, is led out to the waveguide 871-222 by the optical switch 854-4, reaches the diffraction grating 810-4 through an optical switch 855-4, and is emitted. At this point of time, light sequentially reaches respective diffraction gratings 810-1, 810-2, and 810-3, and is sequentially emitted.

Further, the light reflected and returned to the object OBJ is received by the same diffraction grating 810-4, and sequentially passes through the optical switch 855-4, the waveguide 871-222, the optical switch 854-4, the waveguide 871-22, the optical switch 853, the waveguide 871-2, and the optical switch 851, to return to the circulator 840. Meanwhile, the returning light emitted from the circulator 840 travels to the coupler 830 via the waveguide 873.

The coupler 830 multiplexes the light emitted from the circulator 840 and reference light that is the modulated light that has entered from the modulator 820 via the waveguide 872. The light that has passed through the two waveguides 872 and 873 of the coupler 830 is detected by two photodiodes 861 and 862 of the balanced photodiode 860. The distance measurement processing unit compares signals from the two photodiodes 861 and 862 of the balanced photodiode 860, and can remove noise components such as dark current and external light by signal processing or the like. The distance measurement processing unit can also extract only the beat signal generated by the multiplexing at the coupler 830.

The balanced photodiode 860 is an element in which the two photodiodes 861 and 862 are integrated in one chip, and is capable of receiving light in a longer wavelength band compared with a normal photodiode (see Mitsubishi Electric Technical Report, June 2006, Report No. 12 (mitsubishielectric.co.jp), and NTT Technical Journal, Nov. 2007, Balanced Photodiode Module Technology). For example, indium phosphide (InP) or indium gallium arsenide (InGaAs) is used for these photodiodes 861 and 862. Alternatively, germanium photodiodes (Ge-PDs) may be used for the photodiodes 861 and 862, for example.

### (Modification of the Circulator)

Further, the circulator 840 may be an element that changes the outgoing and returning optical paths by rotating the polarizing direction with a Faraday rotator.

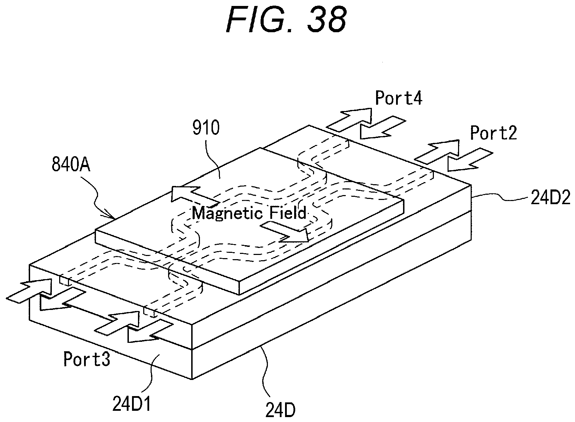

Fig. 38 is a schematic configuration diagram illustrating an example of a circulator 840A including a Faraday rotator 910.

A semiconductor substrate 24D on which the circulator 840A is mounted includes an electronic circuit board 24D1 formed with silicon (Si), and an optical circuit board 24D2 formed with silicon oxide (SiO2). The modulator 820 is connected to a port 1, the optical switch 851 is connected to a port 2, and the coupler 830 is connected to a port 3. Further, a control device for controlling the modulator 820 is connected to a port 4. Note that the port 4 may not be provided.

### (Operation of the Circulator)

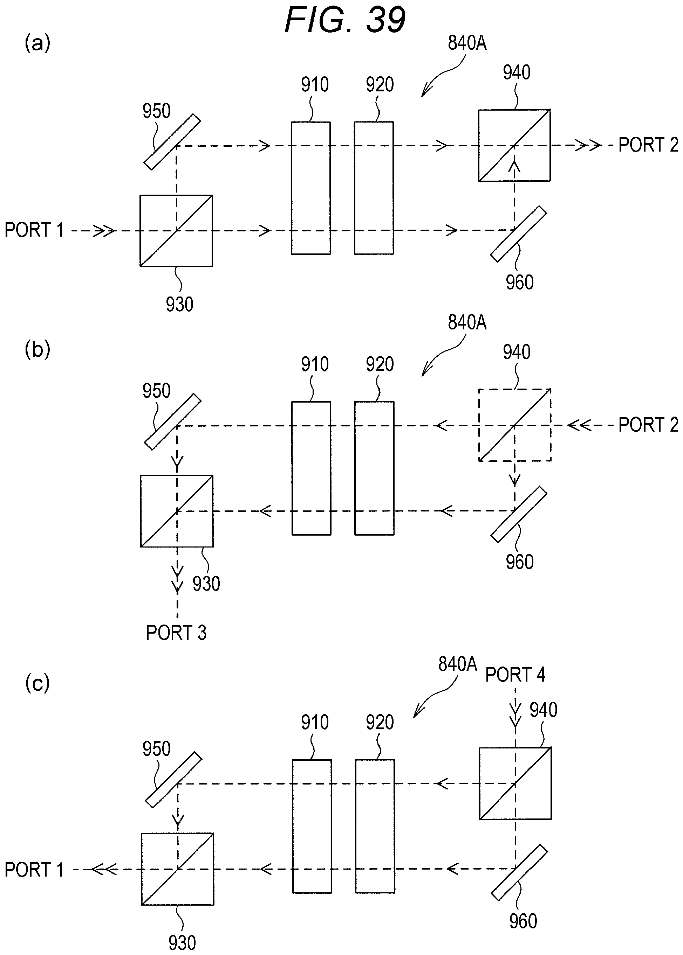

Fig. 39 illustrates an example of an operation of the circulator 840A. The circulator 840A includes the Faraday rotator 910, a half-wavelength plate 920, polarization beam splitters 930 and 940, and reflecting prisms 950 and 960 (see "Structure of an optical circulator and how light travels" (also explained in a video) | FiberLabs Inc. (fiberlabs.co.jp))
The Faraday rotator 910 is an element that rotates the polarization plane by 45 degrees, using the Faraday effect of a magnetic material. The half-wavelength plate 920 is an element that rotates the polarization plane by 45 degrees. The polarization beam splitters 930 and 940 are elements that pass P-polarized light (dot- and-dash lines in Fig. 39) of incoming light, and reflect S-polarized light (dotted lines in Fig. 39).

Fig. 39(a) illustrates light traveling from the port 1 to the port 2. The incoming light from the port 1 is separated into P-polarized light and S-polarized light orthogonal to each other by the polarization beam splitter 930. The separated S-polarized light is reflected by the reflecting prism 950, and is led out to the Faraday rotator 910. The separated light is then rotated 45 degrees in the same direction by the Faraday rotator 910 and the half-wavelength plate 920, which is 90 degrees in total, so that the P-polarized light is converted into S-polarized light, and the S-polarized light is converted into P-polarized light. After that, the S-polarized light and the P-polarized light are multiplexed by the polarization beam splitter 940, and the resultant light is output to the port 2. Note that the S-polarized light converted by the Faraday rotator 910 and the half-wavelength plate 920 is reflected by the reflecting prism 960, is led out to the polarization beam splitter 940, and is reflected by the polarization beam splitter 940 toward the port 2.

Fig. 39(b) illustrates light traveling from the port 2 to the port 3. The incoming light from the port 2 is separated into P-polarized light and S-polarized light orthogonal to each other by the polarization beam splitter 940. The separated S-polarized light is reflected by the reflecting prism 960, and is led out to the half-wavelength plate 920. Here, the light rotated 45 degrees by the half-wavelength plate 920 is rotated 45 degrees in the opposite direction due to the nonreciprocal property unique to the Faraday rotator 910, and returns to the original S-polarized wave and P-polarized wave. The S-polarized wave and the P-polarized wave returned to the original state are then multiplexed by the polarization beam splitter 930, and is output to the port 3. Note that the P-polarized wave that has passed through the Faraday rotator 910 is reflected by the reflecting prism 950, is led out to the polarization beam splitter 930, and is transmitted to the port 3 by the polarization beam splitter 930.

Fig. 39(c) illustrates light traveling from the port 4 to the port 1. The incoming light from the port 4 is separated into P-polarized light and S-polarized light orthogonal to each other by the polarization beam splitter 940. The separated P-polarized light is reflected by the reflecting prism 960, and is led out to the half-wavelength plate 920. Here, the light rotated 45 degrees by the half-wavelength plate 920 is rotated 45 degrees in the opposite direction by the Faraday rotator 910, and returns to the original S-polarized wave and P-polarized wave. The S-polarized wave and the P-polarized wave returned to the original state are then multiplexed by the polarization beam splitter 930, and is output to the port 1. Note that the S-polarized wave that has passed through the Faraday rotator 910 is reflected by the reflecting prism 950, is led out to the polarization beam splitter 930, and is reflected toward the port 1 by the polarization beam splitter 930.

### (Modification of the Modulator)

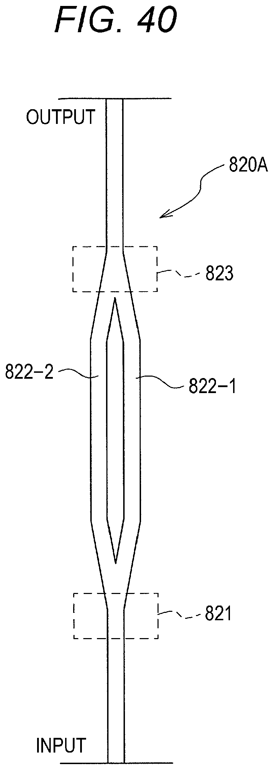

Further, the modulator 820 may be a Y-branch circuit. Fig. 40 illustrates an example of a modulator 820A that is a Y-branch circuit. The modulator 820A includes a branching portion 821, waveguide core portions 822-1 and 822-2, and a multiplexing portion 823. The branching portion 821 branches incoming light into the waveguide core portions 822-1 and 822-2. The multiplexing portion 823 multiplexes the light from the waveguide core portions 822-1 and 822-2.

In the modulator 820A, for example, the refractive index of the waveguide core portion 822-1 on the right side is modulated by heat or carrier injection (PN junction), so that the phase of light passing through the waveguide core portions 822-1 and 822-2 is modulated. When multiplexing is performed by the multiplexing portion 823, modulation is performed by an interference effect (intensifying or weakening) (see "Experimental example of optical modulator (Mach-Zehnder modulator and ring modulator)": Device communication (152) by Akira Fukuda, the latest silicon photonics technology (12) by imec (page 1/2) - EE Times Japan (itmedia.co.jp)). Here, in a case where the refractive index is modulated by carrier injection, the refractive index of the waveguide core portion 822-1 on the right side is modulated by applying a bias voltage to the PN junction, for example. In a case where the refractive index is modulated by heat, on the other hand, the refractive index of the waveguide core portion 822-1 on the right side is modulated by heating the waveguide core portion 822-1, for example.

### <Effects of the Ninth Embodiment>

As described above, according to the ninth embodiment, effects similar to those of the seventh embodiment can be achieved. Also, the optical paths can be made different between the outgoing and the returning in the light traveling direction by the circulator 840. Accordingly, the single diffraction grating 810 can serve as the diffraction grating for emission and the diffraction grating for light reception for each pixel 200, and the single balanced photodiode 860 can serve as the charge generation units provided for the respective pixels 200. Thus, the costs of the photodetection device 1 including the semiconductor substrate 24C can be lowered.

Note that, in the ninth embodiment, the modulator 820 may be provided at a stage subsequent to the circulator 840. Also, in the ninth embodiment, the semiconductor substrate 24C may include an optical circuit board and an electronic circuit board. In this case, the optical circuit board includes the diffraction grating 810, the modulator 820, the coupler 830, the circulator 840, and the plurality of optical switches 850, and the electronic circuit board includes the balanced photodiode 860 and the distance measurement processing unit.

### <Other Embodiments>

The present technology has been described as above according to the first to ninth embodiments, but it should not be understood that the description and drawings forming a part of this disclosure limit the present technology. It will be apparent to those skilled in the art that various alternative embodiments, examples, and operation techniques can be included in the present technology when understanding the spirit of the technical content disclosed in the above embodiments. Also, the configurations disclosed in the first to ninth embodiments and the modifications of the first to ninth embodiments can be appropriately combined within a range in which no contradiction occurs. For example, configurations disclosed in a plurality of different embodiments may be combined, or configurations disclosed in a plurality of different modifications of the same embodiment may be combined. For example, in each of the above embodiments, the explanation is based on the assumption that the distance measurement processing unit is included in the photodetection device 1. However, the distance measurement processing unit may be included in a device other than the photodetection device 1.

### <Examples of Applications to Mobile Structures>

The technology according to the present disclosure (the present technology) can be applied to various products. For example, the technology of the present disclosure may be implemented as a device mounted on any kind of mobile structure such as an automobile, an electric vehicle, a hybrid electric vehicle, a motorcycle, a bicycle, a personal mobility, an airplane, a drone, a ship, a robot, and the like.

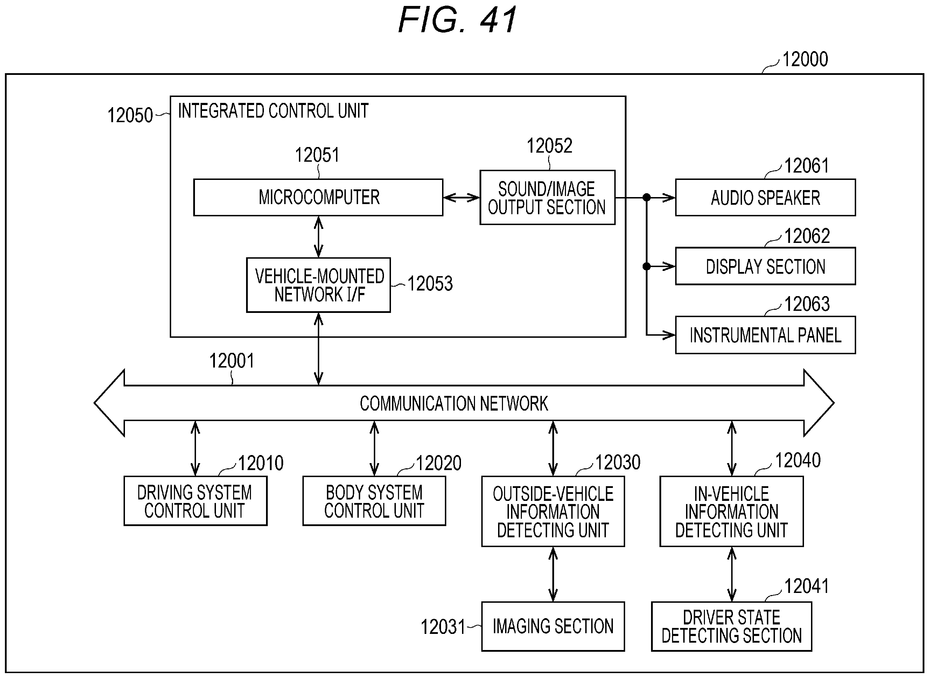

Fig. 41 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig.41, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 41, an audio speaker 12061, a display section 12062, and an instrument panel 12063 are illustrated as the output device. The display section 12062 may, for example, include at least one of an on-board display and a head-up display.

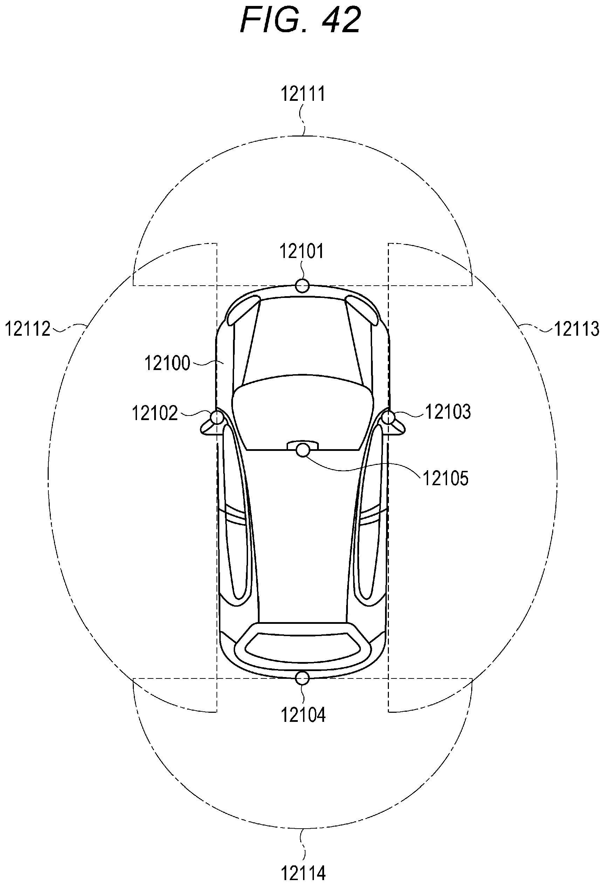

Fig. 42 is a diagram depicting an example of the installation position of the imaging section 12031.

In Fig. 42, a vehicle 12100 includes imaging sections 12101, 12102, 12103, 12104, and 12105 as the imaging section 12031.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The forward images obtained by the imaging sections 12101 and 12105 are used mainly to detect a preceding vehicle, a pedestrian, an obstacle, a traffic signal, a traffic sign, a lane, or the like.

Incidentally, Fig. 42 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of a vehicle control system to which the technology of the present disclosure can be applied has been described above. The technology according to the present disclosure can be applied to the imaging section 12031 and the like, for example, among the components described above. Specifically, the technology can be applied to the photodetection device 1 in Fig. 1.

Note that the present disclosure can also have the following configurations.
(1) A sensor device including:
   an irradiation unit that emits laser light to an object;
   a light receiving unit that receives reflected light from the object; and
   a waveguide that guides the laser light generated from a light source to the irradiation unit,
   in which the irradiation unit and the light receiving unit are located on an optical axis of an external lens optical system.
(2) The sensor device according to (1), further including
   a distance measurement processing unit that calculates a distance to the object, on the basis of a result of light reception performed by the light receiving unit.
(3) The sensor device according to (1), further including
   a lens optical system that condenses the laser light emitted from the irradiation unit, transmits the condensed laser light to the object, condenses reflected light from the object, and transmits the condensed reflected light to the light receiving unit.
(4) The sensor device according to (1), in which
   the waveguide includes a branching portion that branches into a first branch waveguide and a second branch waveguide, and
   one of the first branch waveguide and the second branch waveguide includes a modulation unit that modulates the laser light to be guided to the irradiation unit.
(5) The sensor device according to (4), further including
   a distance measurement processing unit that measures a distance to the object or a velocity of the object, from a beat signal that is included in the reflected light to be received by the light receiving unit from the object and is generated by multiplexing the laser light to be guided to the irradiation unit and the light modulated by the modulation unit.
(6) The sensor device according to (4), further including:
   a light receiving diffraction unit that receives the reflected light from the object; and a multiplexing unit that multiplexes the reflected light to be received by the light receiving diffraction unit from the object and the light modulated by the modulation unit,
   in which the light receiving unit receives the light multiplexed by the multiplexing unit, and extracts the beat signal from a result of the light reception.
(7) The sensor device according to (6), further including
   a distance measurement process that measures a distance to the object or a velocity of the object, from the beat signal.
(8) The sensor device according to (1), in which
   the irradiation unit includes a light receiving diffraction unit that receives the reflected light from the object,
   the sensor device further includes: a modulation unit that modulates the laser light to be guided to the irradiation unit; a multiplexing unit that multiplexes the reflected light to be received by the light receiving diffraction unit from the object and the light modulated by the modulation unit or light before modulation by the modulation unit; and a lead-out unit that leads the laser light generated from the light source to the irradiation unit, and leads reflected light from the light receiving diffraction unit to the multiplexing unit, and
   the light receiving unit receives the light multiplexed by the multiplexing unit, and extracts a beat signal from a result of the light reception.
(9) The sensor device according to (8), further including
   a distance measurement processing unit that measures a distance to the object or a velocity of the object, from the beat signal.
(10) The sensor device according to (1), in which
   the laser light generated from the light source is pulsed light.
(11) The sensor device according to (1), in which
   the irradiation unit and the waveguide are included in an optical circuit unit, and
   the light receiving unit is included in an electronic circuit unit that is bonded to a side opposite from a light incident side of the optical circuit unit.
(12) The sensor device according to (11), in which
   the optical circuit unit and the electronic circuit unit has a plurality of pixels arranged in a matrix, and
   each pixel of the plurality of pixels includes the irradiation unit and the light receiving unit.
(13) The sensor device according to (12), in which
   the optical circuit unit performs at least one of emission of laser light by point sequential driving from the irradiation unit of one pixel, emission of laser light by line sequential driving from the irradiation unit of each pixel of a plurality of pixels in one row or column, and emission of laser light by planar driving from at least some of the irradiation units of all pixels.
(14) The sensor device according to (11), in which
   the optical circuit unit forms a hole or a recess at a position on a light incident side of the light receiving unit.
(15) The sensor device according to (11), in which
   the optical circuit unit forms a light shielding film on a surface on an opposite side from the light incident side of at least some of the light receiving units.
(16) The sensor device according to (1), in which
   the irradiation unit, the waveguide, and the light receiving unit are provided on a substrate.
(17) The sensor device according to (16), in which
   the substrate has a plurality of pixels arranged in a matrix, and
   each pixel of the plurality of pixels includes the irradiation unit and the light receiving unit.
(18) The sensor device according to (17), in which
   the substrate performs at least one of emission of laser light by point sequential driving from the irradiation unit of one pixel, emission of laser light by line sequential driving from the irradiation unit of each of a plurality of pixels in one row or one column, and emission of laser light by planar driving from at least some of the irradiation units of all pixels.
(19) An electronic apparatus including
   a sensor device that includes:
   an irradiation unit that emits laser light to an object;
   a light receiving unit that receives reflected light from the object; and
   a waveguide that guides the laser light generated from a light source to the irradiation unit,
   in which the irradiation unit and the light receiving unit are located on an optical axis of an external lens optical system.

### REFERENCE SIGNS LIST

1 Photodetection device
10 Control unit
11, 11A, 11B Laser light source
12 Lens optical system
13 Semi-reflective mirror
20, 20A, 20B, 20C, 20D, 20E, 20F, 20G, 20H Pixel array unit
21, 21A, 21B, 21C, 21D Optical circuit board
22 Electronic circuit board
23, 23A, 23B Substrate
24, 24A, 24B, 24C Semiconductor substrate
30 Vertical drive unit
32 Read scanning circuit
34 Sweep scanning circuit
40 Horizontal drive unit
50 Collimator lens
60 Monitor
70 Operation unit
100 Distance measuring device
200 Pixel
201 On-chip lens
210 Wiring layer
211, 211-1, 211a, 214, 231, 231a, 236, 247, 850 Optical switch
211-1a, 211-1b Heater
212, 232, 244, 870, 871, 872, 873, 871-1, 871-2, 871-11, 871-12, 871-21, 871-22, 871-111, 871-112, 871-121, 871-122, 871-211, 871-212, 871-221, 871-222 Waveguide
213, 235, 241, 410, 810 Diffraction grating
215, 237, 420 Beam splitter
220 Semiconductor substrate
221, 233, 242, 242-1, 242-2 Charge generation unit
222, 234 Distance measurement processing unit
246 FM modulator
310 Wiring layer
311 Pixel transistor
312 Metal wiring line
510, 530 Hole
520, 540 Light shielding film
610, 830 Coupler
710 Low refractive index substrate
720 High refractive index film
730 Resist pattern
740 Heater
750 Adhesive
820 Modulator
840 Circulator
860 Balanced photodiode
861, 862 Photodiode
910 Faraday rotator
920 Half-wavelength plate
930, 940 Polarization beam splitter
950, 960 Reflecting prism
12000 Vehicle control system
12001 Communication network
12010 Driving system control unit
12020 Body system control unit
12030 Outside-vehicle information detecting unit
12031 Imaging section
12040 In-vehicle information detecting unit
12041 Driver state detecting section
12050 Integrated control unit
12051 Microcomputer
12052 Sound/image output section
12061 Audio speaker
12062 Display section
12063 Instrument panel
12100 Vehicle
12101, 12102, 12103, 12104, 12105 Imaging section
12111, 12112, 12113, 12114 Imaging range

## Claims

1. A sensor device comprising:
an irradiation unit that emits laser light to an object;
a light receiving unit that receives reflected light from the object; and
a waveguide that guides the laser light generated from a light source to the irradiation unit,
wherein the irradiation unit and the light receiving unit are located on an optical axis of an external lens optical system.

2. The sensor device according to according to claim 1, further comprising
a distance measurement processing unit that calculates a distance to the object, on a basis of a result of light reception performed by the light receiving unit.

3. The sensor device according to claim 1, further comprising
a lens optical system that condenses the laser light emitted from the irradiation unit, transmits the condensed laser light to the object, condenses reflected light from the object, and transmits the condensed reflected light to the light receiving unit.

4. The sensor device according to claim 1, wherein
the waveguide includes a branching portion that branches into a first branch waveguide and a second branch waveguide, and
one of the first branch waveguide or the second branch waveguide includes a modulation unit that modulates the laser light to be guided to the irradiation unit.

5. The sensor device according to claim 4, further comprising
a distance measurement processing unit that measures one of a distance to the object or a velocity of the object, from a beat signal that is included in the reflected light to be received by the light receiving unit from the object and is generated by multiplexing the laser light to be guided to the irradiation unit and the light modulated by the modulation unit.

6. The sensor device according to claim 4, further comprising:
a light receiving diffraction unit that receives the reflected light from the object; and a multiplexing unit that multiplexes the reflected light to be received by the light receiving diffraction unit from the object and the light modulated by the modulation unit,
wherein the light receiving unit receives the light multiplexed by the multiplexing unit, and extracts the beat signal from a result of the light reception.

7. The sensor device according to claim 6, further comprising
a distance measurement processing unit that measures one of a distance to the object or a velocity of the object, from the beat signal.

8. The sensor device according to claim 1, wherein
the irradiation unit includes a light receiving diffraction unit that receives the reflected light from the object,
the sensor device further comprises: a modulation unit that modulates the laser light to be guided to the irradiation unit; a multiplexing unit that multiplexes the reflected light to be received by the light receiving diffraction unit from the object and one of the light modulated by the modulation unit or light before modulation by the modulation unit; and a lead-out unit that leads the laser light generated from the light source to the irradiation unit, and leads reflected light from the light receiving diffraction unit to the multiplexing unit, and
the light receiving unit receives the light multiplexed by the multiplexing unit, and extracts a beat signal from a result of the light reception.

9. The sensor device according to claim 8, further comprising
a distance measurement processing unit that measures one of a distance to the object or a velocity of the object, from the beat signal.

10. The sensor device according to claim 1, wherein
the laser light generated from the light source is pulsed light.

11. The sensor device according to claim 1, wherein
the irradiation unit and the waveguide are included in an optical circuit unit, and
the light receiving unit is included in an electronic circuit unit that is bonded to a side opposite from a light incident side of the optical circuit unit.

12. The sensor device according to claim 11, wherein
the optical circuit unit and the electronic circuit unit has a plurality of pixels arranged in a matrix, and
each pixel of the plurality of pixels includes the irradiation unit and the light receiving unit.

13. The sensor device according to claim 12, wherein
the optical circuit unit performs at least one of emission of laser light by point sequential driving from the irradiation unit of one pixel, emission of laser light by line sequential driving from the irradiation unit of each pixel of a plurality of pixels in one row or column, and emission of laser light by planar driving from at least some of the irradiation units of all pixels.

14. The sensor device according to claim 11, wherein
the optical circuit unit forms a hole or a recess at a position on a light incident side of the light receiving unit.

15. The sensor device according to claim 11, wherein
the optical circuit unit forms a light shielding film on a surface on an opposite side from the light incident side of at least some of the light receiving units.

16. The sensor device according to claim 1, wherein
the irradiation unit, the waveguide, and the light receiving unit are provided on a substrate.

17. The sensor device according to claim 16, wherein
the substrate has a plurality of pixels arranged in a matrix, and
each pixel of the plurality of pixels includes the irradiation unit and the light receiving unit.

18. The sensor device according to claim 17, wherein
the substrate performs at least one of emission of laser light by point sequential driving from the irradiation unit of one pixel, emission of laser light by line sequential driving from the irradiation unit of each pixel of a plurality of pixels in one row or column, and emission of laser light by planar driving from at least some of the irradiation units of all pixels.

19. An electronic apparatus comprising
a sensor device that includes:
an irradiation unit that emits laser light to an object;
a light receiving unit that receives reflected light from the object; and
a waveguide that guides the laser light generated from a light source to the irradiation unit,
wherein the irradiation unit and the light receiving unit are located on an optical axis of an external lens optical system.
